# EUROPEAN PATENT SPECIFICATION

(11) **EP 0 488 116 B1**
(45) Date of publication and mention of the grant of the patent: **13.06.2001**
(21) Application number: 91120071.5
(22) Date of filing: 25.11.1991
(51) Int. Cl.: G02F 1/1333, C09K 19/38, C09K 19/00, C09K 19/60

(54) **Liquid crystal element with polymer dispersed in the liquid crystal and method of fabricating the same**
Flüssigkristallelement mit im Flüssigkristall dispergiertem Polymer und Verfahren zu seiner Herstellung
Elément à cristal liquide à polymère dispersé dans le cristal liquide et procédé pur sa fabrication

(30) Priority: 26.11.1990 JP 32177990; 12.02.1991 JP 1875091; 20.02.1991 JP 2602491; 20.02.1991 JP 2602591; 22.03.1991 JP 5912691; 23.05.1991 JP 11861991; 07.06.1991 JP 13617091; 12.06.1991 JP 14000891; 17.06.1991 JP 14458391; 25.06.1991 JP 15311691; 09.07.1991 JP 16797291; 09.08.1991 JP 20071691; 03.09.1991 JP 22298291; 29.10.1991 JP 28270391
(43) Date of publication of application: 03.06.1992
(73) Proprietor: SEIKO EPSON CORPORATION, Shinjuku-ku Tokyo-to (JP)
(72) Inventor: Kobayashi, Hidekazu, Suwa-shi, Nagano-ken (JP); Samizu, Kiyohiro, Suwa-shi, Nagano-ken (JP); Wu, Jin Jei, Suwa-shi, Nagano-ken (JP)
(74) Representative: Hoffmann, Eckart, Dipl.-Ing.

(56) References cited:
- EP-A- 0 313 053
- EP-A- 0 352 637
- WO-A-89/02093
- WO-A-89/09807
- US-A- 4 944 576

## Description

### BACKGROUND OF THE INVENTION

The present invention relates to a so-called polymer dispersed liquid crystal display element having a liquid crystal and a polymer in a phase separated state with the polymer being dispersed in the liquid crystal.

Recently, popular introduction of computers into social life has accelerated the development of man-machine interfaces. In particular the acceleration of such a development is demanded in the field of computer displays; however, twisted nematic type liquid crystal display elements are still dominant in this field. Since this display element employs two polarizing plates, the efficiency of utilizing incident light is low, resulting in darker display.

As a solution to this shortcoming, polymer dispersed liquid crystal display elements, which require no polarizing plates and utilize the difference between refractive indices of a liquid crystal and a polymer, have recently been developed. The polymer dispersed liquid crystal display elements have a liquid crystal and a polymer phase separated and one dispersed in the other. The operational principle of this type of display element is such that when refractive indices of both components become identical upon application or removal of an electric field, the display element becomes transparent, while when the refractive indices become different from each other by the field application or removal, the display element becomes cloudy (translucent).

Fig. 24 illustrates a conventional polymer dispersed liquid crystal display element (refer to U.S. Patent No. 3,600,060 and WO-A-89/09807, for example).This liquid crystal display element has a liquid crystal polymer composite layer sandwiched between two transparent substrates 01 and 08. Both substrates 01 and 08 respectively have transparent electrodes 02 and 07 provided on their inner surfaces. The liquid crystal polymer composite layer has minute particles of a liquid crystal 05 dispersed in a polymer 04 in a phase-separated state. The liquid crystal 05 has a positive dielectric anisotropy and is aligned in the direction of an electric field upon application thereof. When no electric field is applied, the liquid crystal 05 is aligned without any order, so that its refractive index is approximately 1.6 which is an average of the normal refractive index (about 1.5) and the abnormal refractive index (about 1.7). The polymer 04 is hardened in a disordered aligned state, and has a refractive index of approximately 1.5. In the diagram the arrows indicate that the aligning direction is not in order.

In view of the above there is a difference in refractive index of about 0.1 at the interface between the liquid crystal 05 and the polymer 04. When no electric field is applied, therefore, as shown in Fig. 24A, light incident to the liquid crystal polymer composite layer from the above in the diagram is scattered, making the display element cloudy or translucent. It is to be noted that not entire incident light is scattered, but light with a polarization parallel to the aligning direction of the molecules of the liquid crystal is scattered.

When a power supply is connected between the transparent electrodes 02 and 07 as shown in Fig. 24B to apply an electric field to the liquid crystal polymer composite layer, the liquid crystal 05 is aligned in the direction of the electric field, so that it has a refractive index of about 1.5 in the field direction, which becomes equal to or approaches the refractive index of the polymer 04. When the electric field is applied, therefore, light incident to the liquid crystal polymer composite layer from the field direction will passes through the composite layer without being scattered, making the display element transparent.

Although the foregoing description explains that the display element becomes cloudy when no electric field is applied and becomes transparent upon application of an electric field, the action of the display element may be reversed by adjusting the types and combination of the liquid crystal and polymer in use.

More specifically, when the refractive indices of the liquid crystal and polymer are made equal or close to each other upon application of no electric field, the incident light will pass through the liquid crystal polymer composite layer without being scattered. The display element therefore becomes transparent. When the liquid crystal is aligned in the direction of an electric field upon application thereof to thereby increase the difference between the refractive indices of the liquid crystal and the polymer, the incident light will be scattered at the interface between the liquid crystal and polymer. Consequently the display element becomes cloudy or translucent.

Although the principle of utilizing the difference between the refractive indices of a liquid crystal and a polymer is discussed above, there is another polymer dispersed liquid crystal display element which becomes transparent or cloudy based on a different principle. For instance, a phenomenon of causing the display element cloudy by applying an electric field to a liquid crystal polymer composite layer, which contains a mixture of a polymer such as methacrylate having a side chain consisting of biphenyl skeleton and a liquid crystal and has undergone exposure to ultraviolet rays, cannot be explained by the above-described principle.

Further, a polymer liquid crystal composite display element added with dichroic dye has been developed (1990 Society for Information Display International Symposium Digest of Technology Papers, No. 12.1, May 1990). According to this polymer dispersed liquid crystal display element, dichroic dye is added to the liquid crystal in a liquid crystal polymer composite layer sandwiched between two transparent electrodes. When no electric field is applied to this display element, incident light will be scattered due to the difference in refractive index between the liquid crystal and polymer. As the dichroic dye, like the liquid crystal, is aligned without any order, the scattered light permits the color of the dye to be observed. When an electric field is applied to the display element, the dye-containing liquid crystal is aligned in the field direction, eliminating the difference in refractive index at the interface between the liquid crystal and polymer, and the display element becomes transparent. It is customary to place a colored sheet of paper as the background at the back of this display element.

Since the conventional polymer dispersed liquid crystal display elements have minute particles of a liquid crystal dispersed in a polymer which is aligned without any order, a sufficient transmitting state cannot be acquired even when the refractive index of the liquid crystal is made equal to that of the polymer, failing to provide the complete transparent state. Further, since the sizes of the particles of the liquid crystal are not uniform, the display quality is not steady, resulting in low reliability. In addition, when no electric field is applied, the liquid crystal is also aligned without any order, the individual liquid crystal molecules will not have a uniform response to the electric field, preventing the transmittance characteristic of the whole display element from having a precipitous threshold characteristic.

Further, because there is a small difference between the refractive index (1.5) of the polymer and the average refractive index (1.6) of the liquid crystal, sufficient light scattering cannot be achieved to provide the complete translucent condition even when the refractive index of the liquid crystal is made different from that of the polymer. If the liquid crystal polymer composite layer is made thicker to improve the degree of the light scattering, the driving power required would be undesirably increased to several tens of volts.

Furthermore, the conventional display element has a slow or poor threshold characteristic, resulting in the improper degree of contrast. For instance, as the maximum number of scan lines is three for simple matrix driving, it is necessary to use an active element such as a TFT (thin film transistor) element or MIM (metal insulator metal) element when a large-capacity display element is driven by the drive voltage.

In addition, in the case where a polymer liquid crystal display element added with dichroic dye, the transparent state or the colo of the dye is changed by the application or removal of an electric field; however, the display will appear deep. Further, increasing the dye content will darken the display and requires a higher drive voltage.

EP-A-0 313 053 discloses a liquid crystal device having a liquid crystal composite layer comprised of a liquid crystal and a polymer in a phase separated state with the polymer being dispersed in the liquid crystal rather than the liquid crystal being dispersed in the polymer as is the case in document WO-A-89/09807. In the liquid crystal device disclosed in EP-A-0 313 053 the composite layer is in a light-scattering state when no voltage is applied and assumes a transparent state when a voltage beyond a certain threshold is applied.

### SUMMMARY OF THE INVENTION

It is therefore an object of the present invention to provide a polymer dispersed liquid crystal display element which has a liquid crystal and a polymer aligned in the same direction to thereby ensure an excellent threshold characteristic, and good contrast and brightness.

This object is achieved with a liquid crystal device as claimed in claim 1. Preferred embodiments of the invention are subject-matter of the dependent claims.

### BRIEF DESCRIPTION OF THE DRAWINGS

Fig. 1 is a conceptual diagram illustrating the cross section of a polymer dispersed liquid crystal display element according to the first embodiment of the present invention;
Fig. 2 is a graph showing an electrooptic characteristic of the polymer dispersed liquid crystal display element according to the first embodiment;
Fig. 3 is a graph showing an electrcoptic characteristic of a conventional polymer dispersed liquid crystal display element;
Fig. 4 is a conceptual diagram illustrating in part the cross section of a polymer dispersed liquid crystal display element according to the third embodiment of the present invention;
Fig. 5 is a conceptual diagram illustrating in part the cross section of a polymer dispersed liquid crystal display element according to the fourth embodiment of the present invention;
Fig. 6 presents a conceptual diagram illustrating the cross section of a polymer dispersed liquid crystal display element according to the fifth embodiment of the present invention, Fig. 6A showing the operational state when no electric field is applied, Fig. 6B showing the operation state when an electric field is applied;
Fig. 7 is a graph showing an electrooptic characteristic of the polymer dispersed liquid crystal display element according to the fifth embodiment;
Fig. 8 is a graph showing an electrooptic characteristic of the conventional polymer dispersed liquid crystal display element;
Fig. 9 is a graph showing an electrooptic characteristic of the polymer dispersed liquid crystal display element according to the sixth embodiment;
Fig. 10 is a graph showing an electrooptic characteristic of the polymer dispersed liquid crystal display element according to the seventh embodiment;
Fig. 11 is a conceptual diagram illustrating in part the cross section of a polymer dispersed liquid crystal display element according to the ninth embodiment of the present invention;
Fig. 12 is a conceptual diagram illustrating in part the cross section of a polymer dispersed liquid crystal display element according to the tenth embodiment of the present invention;
Fig. 13 is a conceptual diagram illustrating in part the cross section of a polymer dispersed liquid crystal display element according to the eleventh embodiment of the present invention;
Fig. 14 is a conceptual diagram illustrating in part the cross section of a polymer dispersed liquid crystal display element according to the twelfth embodiment of the present invention;
Fig. 15 is a conceptual diagram showing one embodiment of a display element fabricating device used in a method of fabricating a polymer dispersed liquid crystal display element according to the present invention;
Fig. 16 presents a conceptual diagram illustrating the cross section of a polymer dispersed liquid crystal display element according to the thirteenth embodiment of the present invention, Fig. 16A showing the operational state when no electric field is applied, Fig. 16B showing the Operation state when an electric field is applied;
Fig. 17 is an explanatory diagram showing an electron micrograph of the cross section of a polymer dispersed liquid crystal display element according to the thirteenth embodiment, as taken with a magnification of 50000 and viewed down the substrate surface with an angle of 45 degrees, the rubbing direction is longitudinal;
Fig. 18 is a graph showing an electrooptic characteristic of the polymer dispersed liquid crystal display element according to the thirteenth embodiment;
Fig. 19 presents a conceptual diagram illustrating the cross section of a polymer dispersed liquid crystal display element according to the sixteenth embodiment of the present invention, Fig. 19A showing the operational state when no electric field is applied, Fig. 19B showing the Operation state when an electric field is applied;
Fig. 20 is a graph showing an electrooptic characteristic of the polymer dispersed liquid crystal display element according to the sixteenth embodiment;
Fig. 21 presents a conceptual diagram illustrating the cross section of a polymer dispersed liquid crystal display element according to the eighteenth embodiment of the present invention, Fig. 21A showing the operational state when no electric field is applied, Fig. 21B showing the Operation state when an electric field is applied;
Fig. 22 is a graph showing an electrooptic characteristic of the polymer dispersed liquid crystal display element according to the eighteenth embodiment;
Fig. 23 is a graph showing an electrooptic characteristic of the polymer dispersed liquid crystal display element according to the mentioned embodiment;
Fig. 24 presents a conceptual diagram illustrating the cross section of a conventional polymer dispersed liquid crystal display element, Fig. 24A showing the operational state when no electric field is applied, Fig. 24B showing the Operation state when an electric field is applied

### DETAILED DESCRIPTION OF THE PREFERRED EMBODIMENTS

### (First Embodiment)

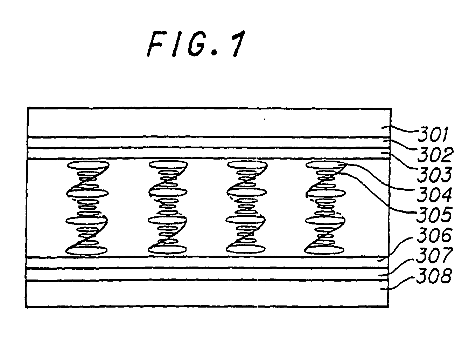

Fig. 1 illustrates a polymer dispersed liquid crystal element according to the first embodiment of the present invention. This embodiment employs a nematic liquid crystal ,containing a chiral component. As illustrated, a liquid crystal polymer composite layer is sandwiched between two transparent substrates 301 and 308. This liquid crystal polymer composite layer has a polymer 304 and nematic liquid crystal 305 twisted in a phase-separated state. The polymer 304 to be used in this embodiment has such a property that the polymer 304 and the nematic liquid crystal 305 will dissolve in each other in a liquid crystal phase to be dispersed, and will have phase separation from each other in a later hardening process. A nematic liquid crystal which has a positive dielectric anisotropy to be aligned in a direction parallel to the field direction is to be used as the liquid crystal 305. The nematic liquid crystal 305 is added with a chiral component. It is considered that the mutual twisting of the polymer 304 and the nematic liquid crystal 305 originates from the added chiral component. The two substrates 301 and 308 respectively have transparent electrodes 302 and 307 on their inner surfaces, with alignment films 303 and 306 formed on the respective electrodes 302 and 307. The alignment films 303 and 306 have undergone such an alignment process as to align the nematic liquid crystal 305 and the polymer 304 in a liquid crystal phase, which have been in a solution phase and sealed between the two substrates 301 and 308, in a direction parallel to the substrates 301 and 308. Although the polymer 304 is in a liquid crystal phase when aligned, the polymer 304 will be hardened later, so that it will be fixed while maintaining the aligned state. Even when an electric field is applied to the polymer 304, therefore, the aligning direction of the polymer 304 will not match the direction of the field. Further, since the liquid crystal 305 will not have no fixed aligning direction, it will be aligned in the field direction when applied with the field.

If no field is applied to the liquid crystal display element, the polymer 304 and the nematic liquid crystal 305 would be aligned in directions parallel to the substrates 301 and 308. Under these conditions, matching the refractive index of the polymer 304 with that of the liquid crystal 305 makes the liquid crystal display element transparent. If no chiral component is mixed in the nematic liquid crystal 305, of the light incident perpendicular to the substrates 301 and 308, only the polarized light having its vibrating direction parallel to the plane where the liquid crystal 305 can move, or a plane parallel to the surface of the sheet of Fig. 1, is modulated. This prevents the contrast from being sufficiently improved. When the chiral component is mixed into the nematic liquid crystal 305 as in this embodiment, of the incident light perpendicular to the substrates 301 and 308, polarized light whose vibrating direction is not parallel to the plane where the liquid crystal 305 can move, can also be modulated efficiently, thus providing a sufficiently improved contrast.

When a power supply is connected between the transparent electrodes 302 and 307 to apply an electric field to the liquid crystal polymer composite layer, the aligning direction of the liquid crystal 305 will coincide with the field direction. In the field direction, therefore, light scattering will occur at the interface between the liquid crystal 305 and the polymer 304 due to their different refractive indices, and this display element becomes translucent.

A method of fabricating the polymer dispersed liquid crystal display element will be described below.

The transparent electrodes 302 and 307 were formed on the two transparent substrates 301 and 308 by a vapor deposition method. A 2% solution of JIB (trade name), a product of Japan Synthetic Rubber Co., Ltd., as polyimide was spin-coated on the surfaces of the transparent electrodes at a rate of 2000 r.p.m. to provide the alignment films 303 and 306. The substrates 301 and 308 with the respective alignment films 303 and 306 were annealed at 150°C. An aligning process was performed on the surfaces of the alignment films 303 and 306. The aligning process was a rubbing process for rubbing the surfaces of the alignment films 303 and 306 in one direction with breached cotton cloth. The rubbing directions were reflected so as to be nearly in parallel to each other when those two substrates were combined. The alignment films of both substrates were securely set face-to-face with a 10-µm gap in between. A polymer precursor and a nematic liquid crystal were mixed at a ratio of 1 to 10 at 100°C, and the resultant mixture was sealed into the gap. The polymer precursor was paraphenyl phenol methacrylate, and the nematic liquid crystal was LV-R2 (product number), a product of Rodic Inc., in this case. In the nematic liquid crystal was mixed 1% of S-1011 (product number), produced by Merck Co., Ltd., as a chiral component. Then, the mixture of the polymer precursor and the nematic liquid crystal was gradually cooled, and they were aligned. Subsequently, the resultant structure was exposed to ultraviolet rays at room temperature to polymerize the polymer precursor to harden it, and cause phase separation of the liquid crystal from the polymer.

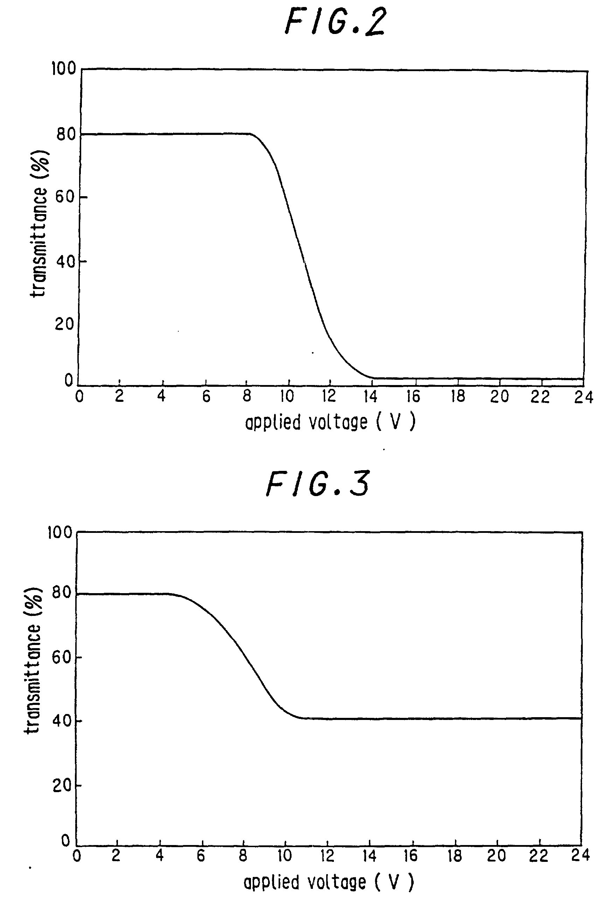

The thus fabricated polymer dispersed liquid crystal display element was almost transparent with no voltage applied thereto, and had a transmittance of 80%, as shown in Fig. 2.

When an AC electric field of 10 KHz and 20 V was applied between two electrodes, the difference between the refractive indices of the polymer and liquid crystal caused the light to scatter. The transmittance in the light scattering state was 1% as shown in Fig. 2. With no chiral component added, as the transmittance is about 40% as shown in Fig. 3, it is apparent that this embodiment has improved the transmittance considerably.

Because the chiral component is added in the liquid crystal according to this embodiment, the threshold characteristic showing a change in the amount of light transmission with a change in voltage is also greatly improved, yielding the precipitousness of the threshold characteristic β = 1.34. This permitted the use of 16 scan lines in simple matrix driving.

The material for the alignment films is not limited to polyimide as used in this embodiment, but a variety of other materials such as polyvinyl alcohol which can align the liquid crystal may also be used. It is still effective to conduct an alignment process on only one of the substrates. When the surfaces of two substrates are to be subjected to an alignment process, it is desirable to optimize the direction of the alignment each time in consideration that this direction is associated with the amount of the contained chiral component. It is preferable that the liquid crystal have as great a refractive index anisotropy Δn as possible in order to increase the contrast. The optimum liquid crystal content in the display element is 50 to 97%. If the liquid crystal content is less than this amount, the display element will not respond to an electric field. With a greater liquid crystal content, the proper contrast will not be yielded. As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of µm and C is the concentration expressed by %. The concentration is about 0.1% to 5%, which is 0.25 to 0.0059 µm in terms of pitch.

Even when other chiral components are to be used, it is desirable that the pitch of the liquid crystal fall within this range. There will not be any problem if the chiral component in use consists of multiple components. Chiral polymers or chiral polymer precursors are available, too. But chiral components are not necessary. These are the same in all embodiments.

Various types of polymers, such as thermoplastic polymer, thermosetting polymer, and ultraviolet-hardened type polymer, can be used as the polymer only if a side chain consisting of a biphenyl skeleton is linked with the main chain of the polymer.

### (Second Embodiment)

This embodiment is a polymer reflection type liquid crystal display element which is a modification of the first embodiment. The fundamental structure is the same as that of the first embodiment shown in Fig. 1, except that metal such as aluminum is used instead of a transparent conductive material for the electrode 307 on the substrate 308, one of the two substrates, in the first embodiment. Accordingly, light incident to the display element is reflected by the electrode 307 serving as a reflection layer, it will pass through the liquid crystal polymer composite layer again but in the reverse direction.

Since the electrode 307 serves as the reflection layer in this embodiment, with the use of the same cell thickness as employed in the first embodiment, the transmittance (reflectance) at the time of light scattering can be reduced to a half, thus doubling the contrast. Because half the cell thickness is sufficient to achieve the same contrast as obtained in the first embodiment, the drive voltage can be reduced to a half. Specifically, with a cell thickness of 7 *µ*m, the required drive voltage could be reduced to 7 V.

While the electrode 307 serves as the reflection layer in this embodiment, a separate reflection layer may be provided in addition to the electrode 307.

### (Third Embodiment)

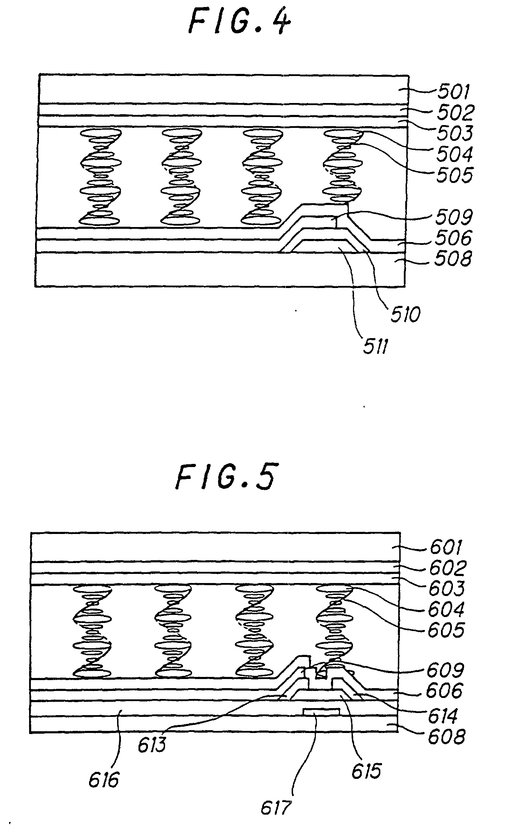

Fig. 4 illustrates a polymer dispersed liquid crystal display element according to the third embodiment of the present invention. The display element of this embodiment employs an MIM (metal insulator metal) element which is a two-terminal composite element. The MIM element, one of active elements, has a nonlinear resistance characteristic. The basic structure of this display element is the same as that of the first embodiment.

A method of fabricating the display element will be described below. This method differs from that in the first embodiment in that the MIM element is formed on a substrate 508. Tantalum was vapor-deposited as an electrode 511 on the surface of the substrate 508, and the resultant surface was oxidized, forming an insulating layer 510. Aluminum was vapor-deposited on the insulating layer 510 as a pixel electrode 509 also serving as a reflection layer. Further, polyimide was coated as an alignment film 506 on the pixel electrode 511, and was annealed before an alignment process. For the alignment film 506 rubbing is also combined as the alignment process. The alignment process is not limited to this particular type, but oblique evaporation can also be used. The MIM element prepared in this manner was placed opposite the substrate 501 on which a transparent electrode 502 and an alignment film 503 were formed, and the periphery of the resultant structure was molded with the cell thickness fixed to 7 *µ*m. A polymer precursor and a nematic liquid crystal were mixed at a ratio of 1:10 at 100°C, and the resultant mixture was sealed into the gap. The polymer precursor was paraphenyl phenol methacrylate, and the nematic liquid crystal was LV-R2 (product number), a product of Rodic Inc., in this case. In the nematic liquid crystal was mixed 1% of the chiral component, S-1011 (product number), produced by Merck Co., Ltd. Then, the mixture of the polymer precursor and the nematic liquid crystal was gradually cooled, and the resultant structure was then exposed to ultraviolet rays at a room temperature to polymerize the polymer precursor to harden it, and cause phase separation of the liquid crystal from the polymer.

The thus fabricated polymer dispersed liquid crystal display element was almost transparent with no voltage applied thereto, and had a reflectance of 75%.

When an AC electric field of 10 KHz and 7 V was applied between two electrodes, the difference between the refractive indices of the polymer and liquid crystal caused the light to scatter. The reflectance in the light scattering state was 1%. With no chiral component added, as the transmittance is about 40%, this embodiment has apparently improved the transmittance considerably.

According to this embodiment, a sample with 400 scan lines and 640 signal lines was prepared, and this sample could provide a uniform display over the whole screen. The formation of the reflection layer on one of the substrate can permit the use of an MIM element, making this invention applicable to a large-capacity display body. The material for the alignment films is not limited to polyimide, but a variety of other materials such as polyvinyl alcohol which can align the liquid crystal may also be used. It is still effective to conduct an alignment process on only one of the substrates. When the surfaces of two substrates are to be subjected to an alignment process, it is desirable to optimize the direction of the alignment each time in consideration that this direction is associated with the amount of the contained chiral component. It is preferable that the liquid crystal have as great a refractive index anisotropy An as possible in order to increase the contrast. The transmittance or reflectance in a transmittive state can be improved by using such liquid crystal and polymer precursor that the molecular structure of the former is similar to the structure of the latter. The optimum liquid crystal content in the display element is 50 to 97%. If the liquid crystal content is less than this amount, the display element: will not respond to an electric field. With a greater liquid crystal content, the proper contrast will not be yielded. As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of *µ*m and C is the concentration expressed by %. The concentration is about 0.1% to 5%, which is 0.25 to 0.0059 *µ*m in terms of pitch. Even when other chiral components are to be used, it is desirable that the pitch of the liquid crystal fall within this range. There will not be any problem if the chiral component in use consists of multiple components.

Various types of polymers, such as thermoplastic polymer, thermosetting polymer, and ultraviolet-hardened type polymer, can be used as the polymer only if a side chain consisting of a biphenyl skeleton is linked with the main chain of the polymer. Alternatively, a polymer having a skeleton similar to that of the liquid crystal molecules may also be used.

While an electrode 509 serving as a reflection film is provided on the substrate 508 on which the MIM element is formed in this embodiment, the reflection layer may be provided to overlap the electrode 502 of the substrate 501 opposite the substrate 508, or may be laminated thereon.

### (Fourth Embodiment)

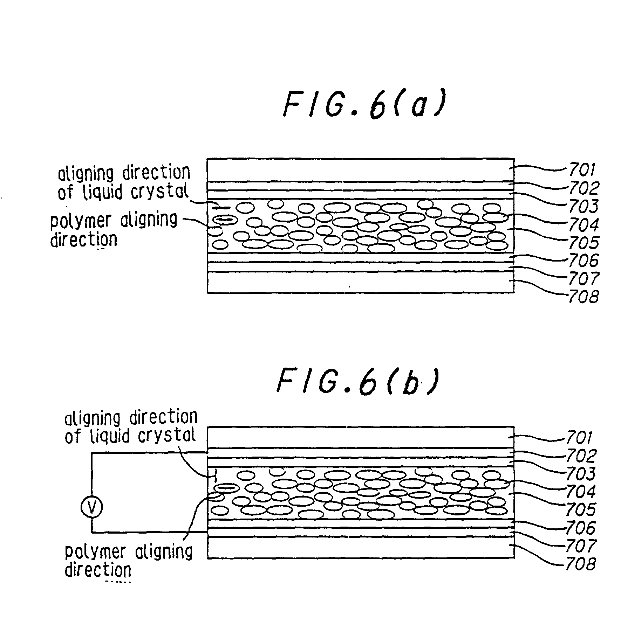

Fig. 5 illustrates a polymer dispersed liquid crystal display element according to the fourth embodiment of the present invention. The display element of this embodiment employs a TFT (thin film transistor) element which is a three-terminal composite element. The fundamental structure of this display element is the same as that of the third embodiment, with the difference of using a TFT element as a substrate 608.

A method of fabricating the display element will be described below. First, a gate electrode 617 was formed on the surface of the substrate 608, and a gate insulating layer 616 was provided on the electrode 617, and a semiconductor layer 615, a drain electrode 614, a source electrode 613 and a pixel electrode 609 also serving as a reflection layer were formed on the resultant structure. After an alignment film 606 was formed on the substrate, the resultant structure was subjected to an alignment process. With regard to a substrate 601, an electrode 602 was formed on that substrate, with an alignment film 603 formed on the electrode 602, and the resultant structure was subjected to an alignment process. As the alignment process, an oblique evaporation method, LB film method, etc. may also be used in addition to the substrate rubbing method. Then, those two substrates 601 and 608 were combined to have the aligning directions nearly parallel to each other, and the periphery of the resultant structure was molded with the cell thickness fixed to 7 *µ*m. A polymer precursor and a nematic liquid crystal were mixed at a ratio of 1:10 at 100°C, and the resultant mixture was sealed into the gap. The polymer precursor was paraphenyl phenol methacrylate, and the nematic liquid crystal was LV-R2 (product number), a product of Rodic Inc., in this case. In the nematic liquid crystal was mixed 1% of the chiral component, S-1011 (product number), produced by Merck Co., Ltd. Subsequently, the mixture of the polymer precursor and the nematic liquid crystal was gradually cooled and they were aligned. Then, the resultant structure was exposed to ultraviolet rays at a room temperature to polymerize the polymer precursor to harden it, and cause phase separation of the liquid crystal from the polymer.

The thus fabricated polymer dispersed liquid crystal display element was almost transparent with no voltage applied thereto, and had a reflectance of 75%.

When an AC electric field of 10 KHz and 7 V was applied between two electrodes, the difference between the refractive indices of a polymer 604 and liquid crystal 605 caused the light to scatter. The reflectance in the light scattering state was 1%. With no chiral component added, as the transmittance is about 40%, this embodiment has apparently improved the transmittance considerably.

According to this embodiment, a sample with 400 scan lines and 640 signal lines was prepared, and this sample could provide a uniform display over the whole screen. The formation of the reflection layer in this manner can permit the use of a TFT element, which makes this invention applicable to a large-capacity display body.

The material for the alignment films is not limited to polyimide, but a variety of other materials such as polyvinyl alcohol which can align the liquid crystal in a physical sense may also be used. It is still effective to conduct an alignment process on only one of the substrates. When the surfaces of two substrates are to be subjected to an alignment process, it is necessary to optimize the direction of the alignment each time in consideration that this direction is associated with the amount of the contained chiral component.

It is preferable that the liquid crystal have as great a refractive index anisotropy Δn as possible in order to increase the contrast. The liquid crystal may be of a type having a positive dielectric anisotropy. The transmittance or reflectance in a transmittive state can be improved by using such a liquid crystal and polymer precursor that the molecular structure of the former is similar to the structure of the latter. The optimum liquid crystal content in the display element is 50 to 97%. If the liquid crystal content is less than this amount, the display element will not respond to an electric field. With a greater liquid crystal content, the proper contrast will not be yielded.

As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of *µ*m and C is the concentration expressed by %. The concentration is about 0.1% to 5%, which is 0.25 to 0.0059 *µ*m in terms of pitch. Even when other chiral components are to be used, it is desirable that the pitch of the liquid crystal fall within this range. There will not be any problem if the chiral component in use consists of multiple components.

Various types of polymers, such as thermoplastic polymer, thermosetting polymer, and ultraviolet-hardened type polymer, can be used as the polymer as long as a side chain consisting of a biphenyl skeleton is linked with the main chain of the polymer. Alternatively, a polymer having a skeleton similar to that of the liquid crystal molecules may also be used.

Although the above embodiments have been explained as a polymer reflected type with reference to the application to an MIM element and TFT, the embodiments may be applied to MIM and TFT elements as in a transmittive type as long as the drive voltage for the polymer dispersed liquid crystal display element can be reduced. Alternatively, even if the drive voltage for the polymer dispersed liquid crystal display element is not reduced, these embodiments may directly be combined with the MIM and TFT elements as a transmittive type.

While this embodiment uses two substrates, the liquid crystal polymer composite layer may be formed on one substrate. It is unnecessary to form alignment films on both substrates; an alignment process only on one of the substrate is also effective. The cell thickness is not limited to the specified value, but may be determined according to the usage.

The present invention is not limited to the above embodiment, but may be applicable to a computer display, a light controlling element, a light valve, a light control mirror, etc.

### (Fifth Embodiment)

Fig. 6 illustrates a polymer dispersed liquid crystal element according to the fifth embodiment of the present invention. This embodiment employs epoxy resin for a thermosetting polymer. This embodiment has the same basic structure as the first embodiment shown in Fig. 1.

A method of fabricating the polymer dispersed liquid crystal display element will now be described.

First, electrodes 702 and 707 were formed on two transparent substrates 701 and 708 by a vapor deposition method. A 2% solution of JIB (trade name), produced by Japan Synthetic Rubber Co., Ltd., as polyimide was spin-coated on the surfaces of the transparent electrodes 702 and 707 at a rate of 2000 r.p.m., yielding alignment films 703 and 706. The substrates 701 and 708 with the respective alignment films 703 and 706 were annealed at 150°C. An aligning process was performed on the surfaces of the alignment films 703 and 706. The aligning process was a rubbing process for rubbing the surfaces of the alignment films 703 and 706 in one direction with breached cotton cloth. Besides the rubbing process, other means, such as an oblique evaporation method and an LB film method, which aligns the liquid crystal in a physical sense in a direction parallel to the substrates 701 and 708, may also be used. The rubbing directions were determined in such a way that they would become nearly parallel to each other when combining the two substrates 701 and 708. The surfaces of alignment films 703 and 706 of the two substrates 701 and 708 were placed opposite to each other, while fixing the cell thickness to 10 *µ*m.

An epoxy resin and a nematic liquid crystal were mixed at a ratio of 1 to 9 at 100°C, and the resultant mixture was sealed into the gap. As the epoxy resin, YDF-170 (trade name), a product of Toto Kasei Co., Ltd., was used with addition of a curing agent 121 (trade name), produced by Shell Oil Co., Ltd. LV-R2 (product number), a product of Rodic Inc., was used as the nematic liquid crystal, and 1% of S-1011 (product number), produced by Merck Co., Ltd., was added. Then, the mixture of the epoxy resin and the nematic liquid crystal was gradually cooled, and they were aligned. The resultant structure was then left for one day at root temperature to harden the epoxy resin and cause phase separation of the liquid crystal 705 from the polymer 704. In Fig. 6, the arrows indicate the aligning directions of the polymer 704 and liquid crystal 705; the same is true of the other drawings.

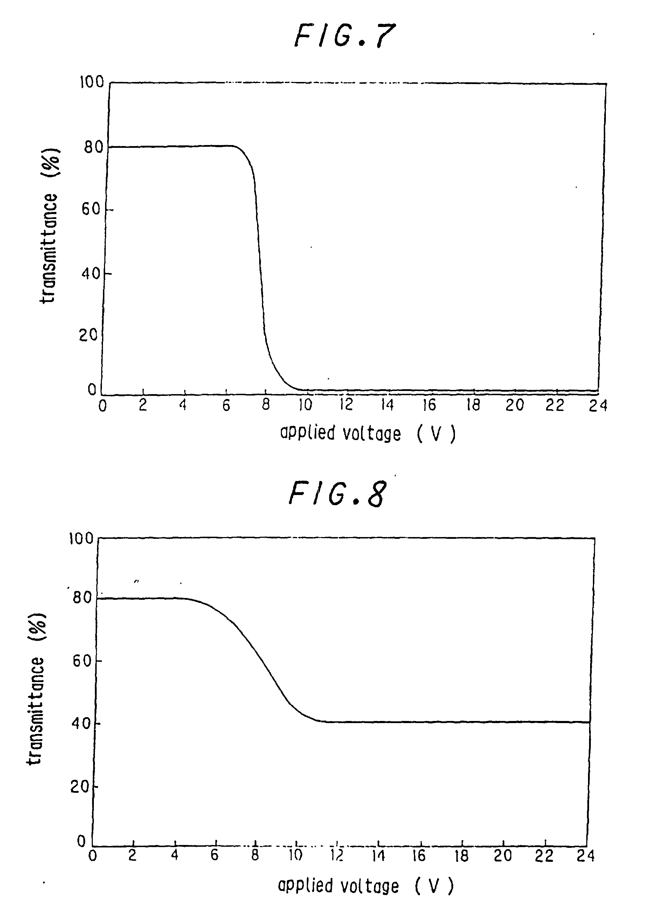

The thus fabricated polymer dispersed liquid crystal display element was almost transparent upon application of no voltage thereto as shown in Fig. 6A, and had a transmittance of 80%, as shown in Fig. 7. When an AC electric field of 10 KHz and 10 V was applied between two electrodes 702 and 707 as shown in Fig. 6B, the difference between the refractive indices of the polymer 704 and liquid crystal 705 caused the light to scatter. The transmittance in the light scattering state was 1% as shown in Fig. 7. With no chiral component added, as the transmittance is about 40% as shown in Fig. 8, it is apparent that this embodiment has improved the transmittance considerably. Further, the threshold characteristic which shows a change in the amount of light transmission when the voltage varies has also been improved significantly.

The material for the alignment films is not limited to polyimide as used in this embodiment, but a variety of other materials such as polyvinyl alcohol which can align the liquid crystal may also be used. It is still effective to conduct an alignment process on only one of the substrates. When the surfaces of two substrates are to be subjected to an alignment process, it is desirable to optimize the direction of the alignment each time in consideration that this direction is associated with the amount of the contained chiral component. It is preferable that the liquid crystal have as great a refractive index anisotropy Δn as possible in order to increase the contrast. Further, the liquid crystal may be of a type having a positive dielectric anisotropy. The optimum liquid crystal content in the display element is 50 to 97%. If the liquid crystal content is less than this amount, the display element will not respond to an electric field. With a greater liquid crystal content, the proper contrast will not be yielded. As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of *µ*m and C is the concentration expressed by %. The concentration is about 0.1% to 5%, which is 0.25 to 0.0059 *µ*m in terms of pitch. Even when other chiral components are to be used, it is desirable that the pitch of the liquid crystal fall within this range. There will not be any problem if the chiral component in use consists of multiple components.

As the polymer, a thermosetting type which can be hardened for polymerization in a phase where it is mixed with the liquid crystal, can also be used. For instance, 4,4'-propyl biphenyl(ω,ω'-diisocyanate and diol of biphenyl may be mixed and polymerized. Ideally, a polymer precursor having a skeleton similar to the liquid crystal molecules can also be used.

### (Sixth Embodiment)

This embodiment employs thermoplastic poly α methylstyrene for a thermoplastic polymer. This embodiment has the same basic structure as embodiment shown in Fig. 6.

A method of fabricating this display element will now be described. First, electrodes were formed on two transparent substrates by a vapor deposition method. A 2% solution of JIB (trade name), produced by Japan Synthetic Rubber Co., Ltd., as polyimide was spin-coated on the surfaces of the substrates at a rate of 2000 r.p.m.,
yielding alignment films. Those substrates were then annealed at 150 °C. Subsequently, the surfaces of the alignment films were rubbed in one direction. Besides the described rubbing process, other methods, such as an oblique evaporation method and an LB film method, which aligns the liquid crystal, may also be used. The rubbing directions were determined in such a way that they would become nearly parallel to each other when combining the two substrates. The surfaces of alignment films of the two substrates were placed Opposite to each other, with the cell thickness fixed to 10 µm. A mixture of a thermoplastic poly α methylstyrene and a liquid crystal, made at 100°C was sealed into the gap. As the liquid crystal RDP80616 (product number), a product of Rodic Inc., was used. Then, the mixture of the thermoplastic poly α methylstyrene and the liquid crystal was gradually cooled, and they were aligned at room temperature to cause phase separation and to harden the thermoplastic poly α methylstyrene.

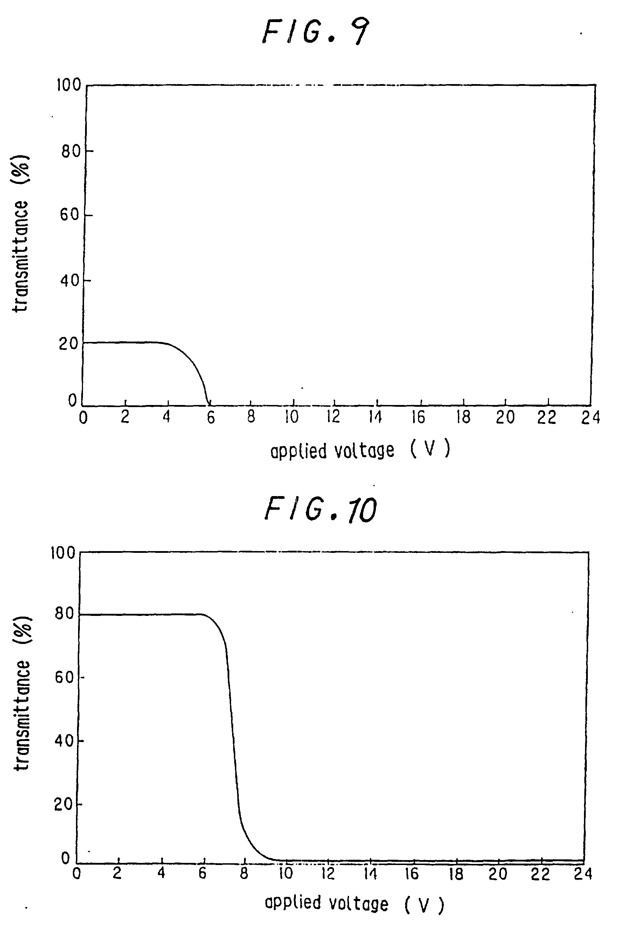

The thus fabricated polymer dispersed liquid crystal display element had a transmittance of 20%, as shown in Fig. 9.

When an AC electric field of 10 KHz and 6 V was applied between two electrodes, the difference between the refractive indices of the polymer and liquid crystal caused light scattering. The transmittance in the light scattering state was 1% as shown in Fig. 9.Although this characteristic is not so good, by optimizing the structure of the thermoplastic resin, a further improvement of the characteristic can be expected. Specifically, a skeleton which is easily linked with the liquid crystal molecules, such as a biphenyl group, may be introduced in a side chain or main chain.

The material for the alignment films is not limited to polyimide as used in this embodiment, but a variety of other materials such as polyvinyl alcohol which can align the liquid crystal may also be used. It is still effective to conduct an alignment process on only one of the substrates. With addition of a chiral component, for example, S-101l (product number), produced by Merck Co., Ltd., the effect of improving the threshold characteristic and the control was confirmed. When the surfaces of two substrates are to be subjected to an alignment process, it is desirable to optimize the direction of the alignment each time in consideration that this direction is associated with the amount of the contained chiral component.

It is preferable that the liquid crystal have as great a refractive index anisotropy Δn as possible in order to increase the contrast. Further, the liquid crystal may be of a type having a positive dielectric anisotropy. The optimum liquid crystal content in the display element is 50 to 97%. If the liquid crystal content is less than this amount, the display element will not respond to an electric field. With a greater liquid crystal content, the proper contrast will not be yielded. The chiral component to be mixed into the liquid crystal has only to be added under the conditions specified in the fifth embodiment. As the polymer, a thermoplastic type which can be dissolved into the liquid crystal at a temperature higher than the operational temperature, can be aligned in a liquid solution phase, and can cause phase separation of the polymer from the liquid crystal when cooled, may also be used.

### (Seventh Embodiment)

This embodiment employs a side-chain type polymer liquid crystal having a cyanobiphenol group as a polymer liquid crystal. The basic structure of this embodiment is the same as that of the fifth embodiment shown in Fig. 6.

A method of fabricating this display element will now be described. First, electrodes 2 and 7 were formed on two transparent substrates 1 and 8 by a vapor deposition method. A 2% solution of JIB (trade name), produced by Japan Synthetic Rubber Co., Ltd., as polyimide was spin-coated on the surfaces of the substrates at a rate of 2000 r.p.m., yielding alignment: films. Those substrates were then annealed at 150°C. Subsequently, the surfaces of the alignment films were rubbed in one direction. Besides the described rubbing process, other methods, such as an oblique evaporation method, and an LB film method, which aligns the liquid crystal, may also be used. The rubbing directions were determined in such a way that they would become nearly parallel to each other when combining the two substrates. The surfaces of alignment films of the two substrates were placed-opposite to each other, with the cell thickness fixed to 10 *µ*m.

A mixture of a side-chain type polymer liquid crystal having a cyanobiphenol group as expressed by a chemical formula 1 and a nematic liquid crystal, made at 120°C, was sealed into the gap. LV-R2 (product number), a product of Rodic Inc., was used as the nematic liquid crystal, and 1% of S-1011 (product number), from Merck Co., Ltd., was added as a chiral component.

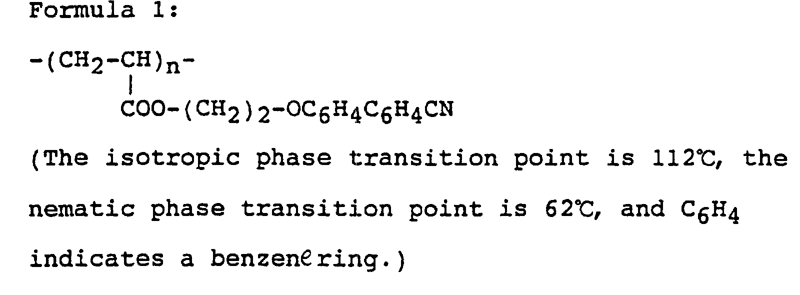

Subsequently, the mixture of the side-chain type polymer liquid crystal and the nematic liquid crystal was gradually cooled, and they were aligned to cause phase separation of the liquid crystal from the polymer liquid crystal at 70°C.

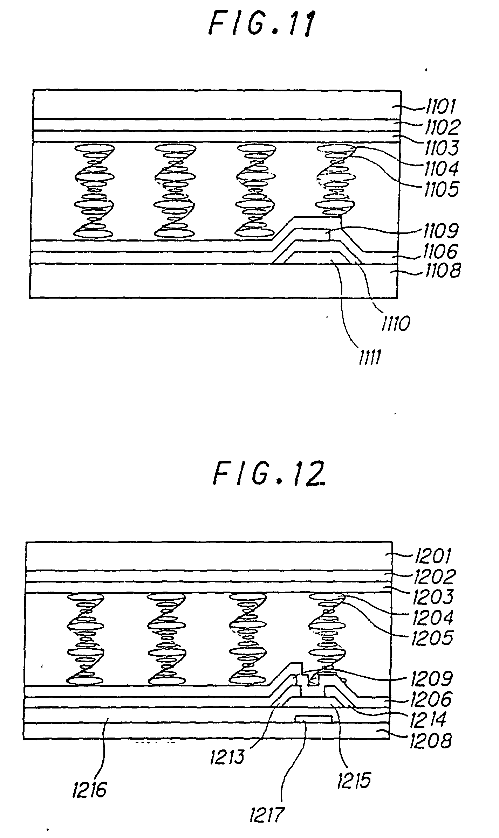

The thus fabricated polymer dispersed liquid crystal display element had a transmittance of 80%, as shown in Fig. 10.

When an AC electric field of 10 KHz and 10 V was applied between two electrodes, the difference between the refractive indices of the polymer and liquid crystal caused light scattering. The transmittance in the light scattering state was 1% as shown in Fig. 10. This characteristic is significantly improved as compared with the prior art in which no chiral component is added as shown in Fig. 8. Although display is possible without any chiral component, the characteristic would be deteriorated.

The material for the alignment films is not limited to polyimide as used in this embodiment, but a variety of other materials such as polyvinyl alcohol which can align the liquid crystal may also be used. It is still effective to conduct an alignment process on only one of the substrates. When the surfaces of the two substrates are to be subjected to an alignment process, it is desirable to optimize the direction of the alignment each time in consideration that this direction is associated with the amount of the contained chiral component. It is preferable that the liquid crystal having as great a refractive index anisotropy Δn as possible in order to improve the contrast. Further, the liquid crystal may be of a type having a positive dielectric anisotropy. The optimum liquid crystal content in the display element is 50 to 97%. If the liquid crystal content is less than this amount, the display element will not respond to an electric field. With a greater liquid crystal content, the proper contrast will not be yielded.

The chiral component to be mixed into the liquid crystal has only to be added under the conditions specified in the fifth embodiment. The polymer liquid crystal is not limited to a side-chain type or a main-chain type but other types which can be dissolved into the liquid crystal at a temperature higher than the operational temperature can be aligned in a liquid solution phase, and can cause phase separation of the polymer from liquid crystal when cooled, may also be used. For instance, polymer liquid crystals as expressed by chemical formulae 2 to 9 may be used as well. Of course those specified polymers are just examples, and it is desirable to optimize the structure by a combination with a liquid crystal, etc. In this embodiment when the solubility between the liquid crystal and polymer liquid crystal is poor, a cosolvent for the liquid crystal and polymer liquid crystal may be used. In this case the polymer liquid crystal should be of such a type which changes into a liquid crystal phase when mixed with the cosolvent, and the solvent should be removed after alignment to cause phase separation of the liquid crystal from the polymer liquid crystal.

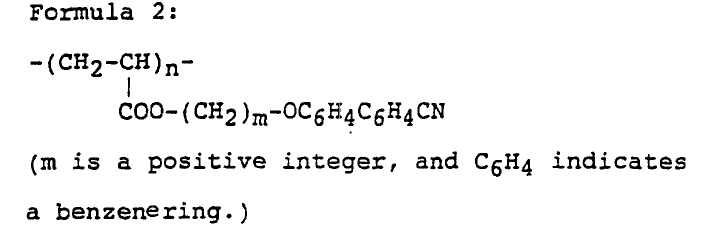

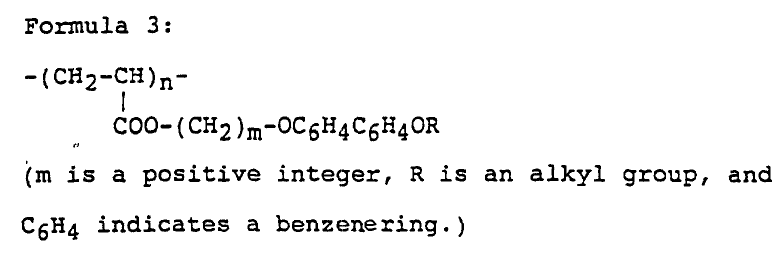

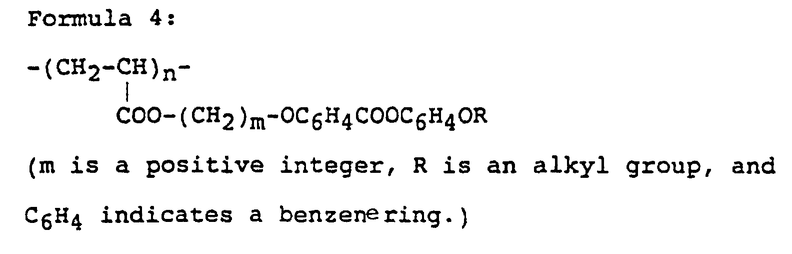

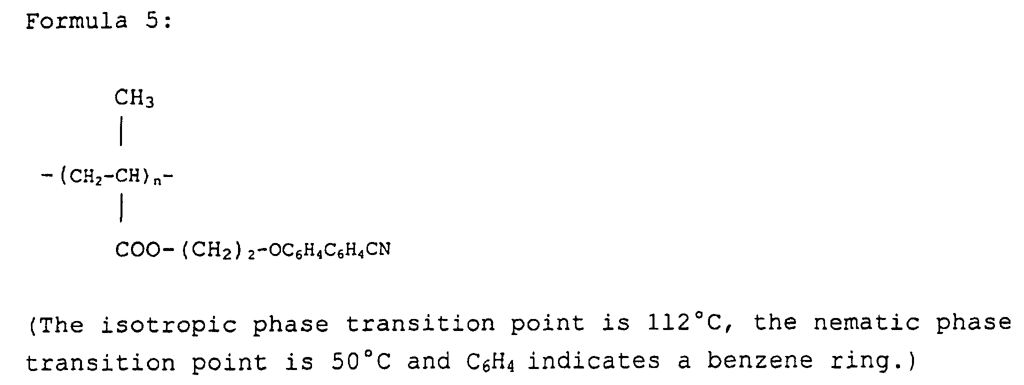

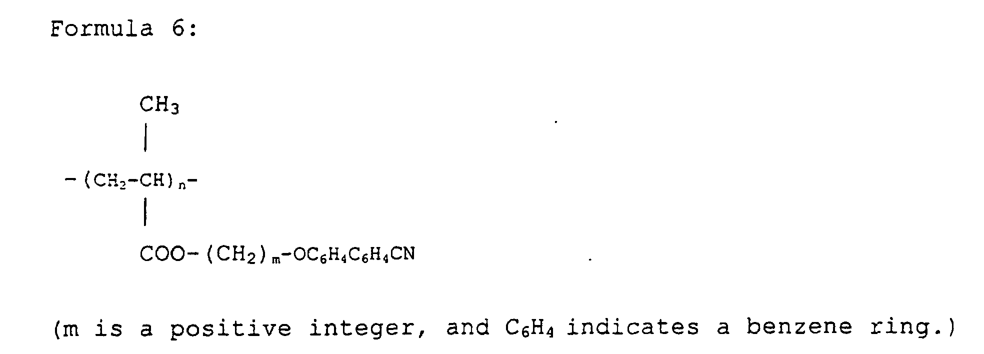

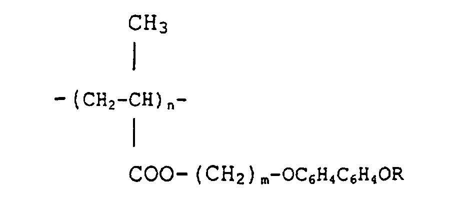

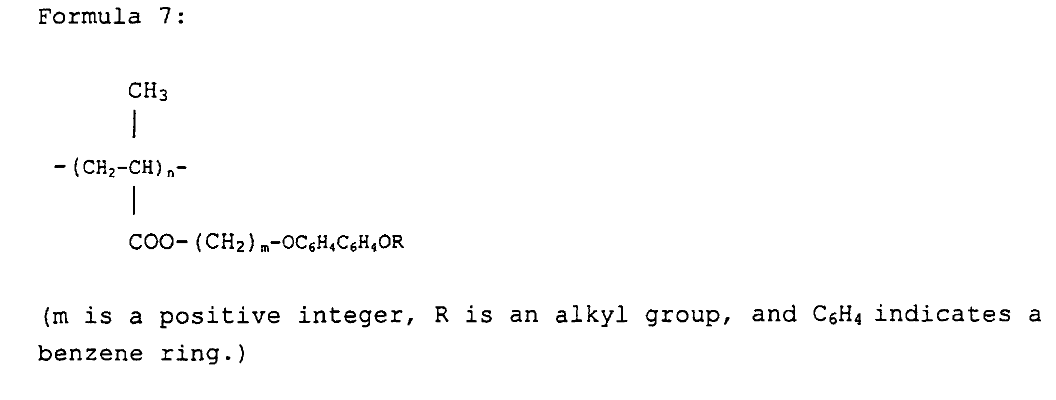

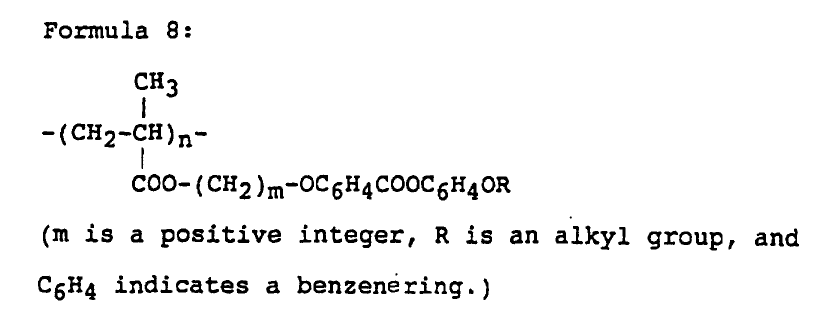

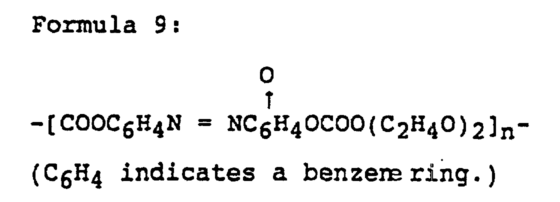

### (Eighth Embodiment)

This embodiment is a polymer reflected liquid crystal display element which is a modification of the fifth to seventh embodiments. The fundamental structure is the same as that of the seventh embodiment shown in Fig. 6, except that metal such as aluminum is used instead of a transparent conductive material for the electrode 707 on the substrate 708.

Since the electrode 707 serves as the reflection layer in this embodiment, with the use of the same cell thickness as employed in the seventh embodiment, the transmittance (reflectance) at the time of light scattering can be reduced to a half. That is, the contrast was doubled. Because a half the cell thickness is sufficient to achieve the same contrast as obtained in the seventh embodiment, the drive voltage can be reduced to a half advantageously. More specifically, with the cell thickness set to 5 µm, the required drive voltage could be reduced to 5 V.

### (Ninth Embodiment)

Fig. 11 illustrates a polymer dispersed liquid crystal display element according to the ninth embodiment of the present invention. The display element of this embodiment employs an MIM element which is a two-terminal composite element. The basic structure of this display element is the same as that of the fifth embodiment in Fig. 6 except for an MIM element formed on a substrate 1108. Tantalum was vapor-deposited as an electrode 1111 on the surface of the substrate 1108, and the resultant surface was oxidized, forming an insulating layer 1110. Aluminum was vapor-deposited as a pixel electrode 1109 on the insulating layer 1110. Further, polyimide was coated as an alignment film 1106 on the pixel electrode 1109, and was annealed before an alignment process. The alignment process is not limited to this particular type, but oblique evaporation can also be used. The substrate 1108 with the MIM element prepared in this manner and a substrate 1101 on which an alignment film 1103 and an electrode 1102 were formed were combined, and the periphery of the resultant structure was molded with the cell thickness fixed to 7 *µ*m.

An epoxy resin and a nematic liquid crystal were mixed at a ratio of 1:9 at 100°C, and the resultant mixture was sealed into the gap. As the epoxy resin, YDF-170 (trade name), a product of Toto Kasei Co., Ltd., was used with addition of a curing agent 121 (trade name), produced by Shell Oil Co., Ltd. LV-R2 (product number), a product of Rodic Inc., was used as the nematic liquid crystal, and 1% of S-1011 (product number), produced by Merck Co., Ltd., was mixed as a chiral component. Subsequently, the mixture of the epoxy resin and the nematic liquid crystal was gradually cooled, and they were aligned. The resultant structure was then left for one day at a room temperature to harden the epoxy resin and cause phase separation of the liquid crystal 1105 from the polymer 1104.

The thus fabricated polymer dispersed liquid crystal display element was almost transparent upon application of no voltage thereto, and had a reflectance of 75%. When an AC electric field of 10 KHz and 7 V was applied between two electrodes, the difference between the refractive indices of the polymer 1104 and liquid crystal 1105 caused the light to scatter. The reflectance in the light scattering state was 1%. According to this embodiment, a sample with 400 scan lines and 640 signal lines was prepared, and this sample could provide a uniform display over the whole screen. The formation of the reflection layer on one of the substrate can permit the use of an MIM element, making this invention applicable to a large-capacity display body.

The material for the alignment films is not limited to polyimide as used in this embodiment, but a variety of other materials, such as polyvinyl alcohol, which can align a liquid crystal in a physical sense, may be used as well. It is still effective to conduct an alignment process on only one of the substrates. When the surfaces of two substrates are to be subjected to an alignment process, it is desirable to optimize the direction of the alignment each time in consideration that this direction is associated with the amount of the contained chiral component.

It is preferable that the liquid crystal have as great a refractive index anisotropy Δn as possible in order to increase the contrast. The transmittance or reflectance in a transmittive state can be improved by using such a liquid crystal and polymer precursor that the liquid crystal molecular structure is similar to the structure of the polymer precursor. The optimum liquid crystal content in the display element is 50 to 97%. If the liquid crystal content is less than this amount, the display element will not respond to an electric field. If it is greater than the value, the proper contrast will not be acquired.

The chiral component to be mixed into the liquid crystal should be added under the conditions specified in the fifth embodiment.

As the polymer, the one specified in the sixth embodiment or the seventh embodiment may also be used.

Although the electrode 1109 serving as the reflection layer is provided on the substrate 1108 on which the MIM element is formed in this embodiment, the reflection layer may be deposited to overlap the electrode 1102 of the substrate 1101 facing the substrate 1108, or may be laminated thereon.

### (Tenth Embodiment)

Fig. 12 illustrates a polymer dispersed liquid crystal display element according to the tenth embodiment of the present invention. The display element of this embodiment employs a TFT element which is a three-terminal composite element. The fundamental structure of this display element is the same as that of the seventh embodiment shown in Fig. 6.

A method of fabricating the display element will be described below. This method differs from the seventh embodiment in that the TFT element is formed on a substrate 1208. A gate electrode 1217 was formed on the surface of the substrate 1208, and a gate insulating layer 1216 was provided on the electrode 1217, and a semiconductor layer 1215, a drain electrode 1214, a source electrode 1213 and a pixel electrode 1209 also serving as a reflection layer were formed on the resultant structure. After an alignment film 1206 was formed on the electrode 1209, the resultant structure was subjected to an alignment process. With regard to the other substrate 1201, an electrode 1202 was formed on that substrate, with an alignment film 1203 formed on the electrode 1202, and the resultant structure was subjected to an alignment process. As the alignment process, an oblique evaporation method as well as a method of rubbing the alignment films can be used. Then, those two substrates 1201 and 1208 were combined to have the aligning directions nearly parallel to each other, and the periphery of the resultant structure was molded with the cell thickness fixed to 7 *µ*m.

A mixture of a side-chain type polymer liquid crystal having a cyanobiphenol group and a nematic liquid crystal, made at 120°C, was sealed into the gap. LV-R2 (product number), a product of Rodic Inc., was used as the nematic liquid crystal, and 1% of S-1011 (product number), from Merck Co., Ltd., was mixed as a chiral component. Subsequently, the mixture of the side-chain type polymer liquid crystal and the nematic liquid crystal was gradually cooled, and they were aligned to cause phase separation of the liquid crystal 1205 from the polymer liquid crystal 1204 at 70°C.

The thus fabricated polymer dispersed liquid crystal display element was almost transparent upon application of no voltage thereto, and had a reflectance of 75%.

When an AC electric field of 10 KHz and 7 V was applied between two electrodes, the difference between the refractive indices of the polymer 1204 and liquid crystal 1205 caused light scattering. The reflectance in the light scattering state was 1%.

According to this embodiment, a sample with 400 scan lines and 640 signal lines was prepared, and this sample could provide a uniform display over the whole screen. The formation of the reflection layer can permit the use of a TFT element, making this invention applicable to a large-capacity display body. The material for the alignment films is not limited to polyimide as used in this embodiment, but a variety of other materials, such as polyvinyl alcohol, which can align a liquid crystal in a physical sense, may be used as well. It is still effective to conduct an alignment process on only one of the substrates. When the surfaces of two substrates are to be subjected to an alignment process, it is desirable to optimize the direction of the alignment each time in consideration that this direction is associated with the amount of the contained chiral component. It is preferable that the liquid crystal have as great a refractive index anisotropy An as possible in order to increase the contrast. The transmittance or reflectance in a transmittive state can be improved by using such a liquid crystal and polymer precursor that the liquid crystal molecular structure is similar to the structure of the polymer precursor. The optimum liquid crystal content in the display element is 50 to 97%. If the liquid crystal content is less than this amount, the display element will not respond to an electric field. If it is greater than the value, the proper contrast will not be acquired. The chiral component to be mixed into the liquid crystal has only to be added under the conditions specified in the fifth embodiment.

As the polymer, those specified in the seventh and sixth embodiments as well as the seventh embodiment may also be used.

Although the above embodiment has been explained as a polymer reflected type with reference to its application to an MIM element and TFT, the embodiment may be applied to MIM and TFT elements as in a transmittive type as long as the drive voltage for the polymer dispersed liquid crystal display element can be reduced. Alternatively, if the voltage withstandability of the MIM and TFT elements is enhanced, this embodiment may directly be combined with the MIM and TFT elements as a transmittive type.

While this embodiment uses two substrates, the liquid crystal polymer composite layer may be formed on one substrate. It is unnecessary to form alignment films on both substrates, and an alignment process only on one of the substrate is also effective. The cell thickness is not limited to the specified value, but may be determined according to the usage.

### (Eleventh Embodiment)

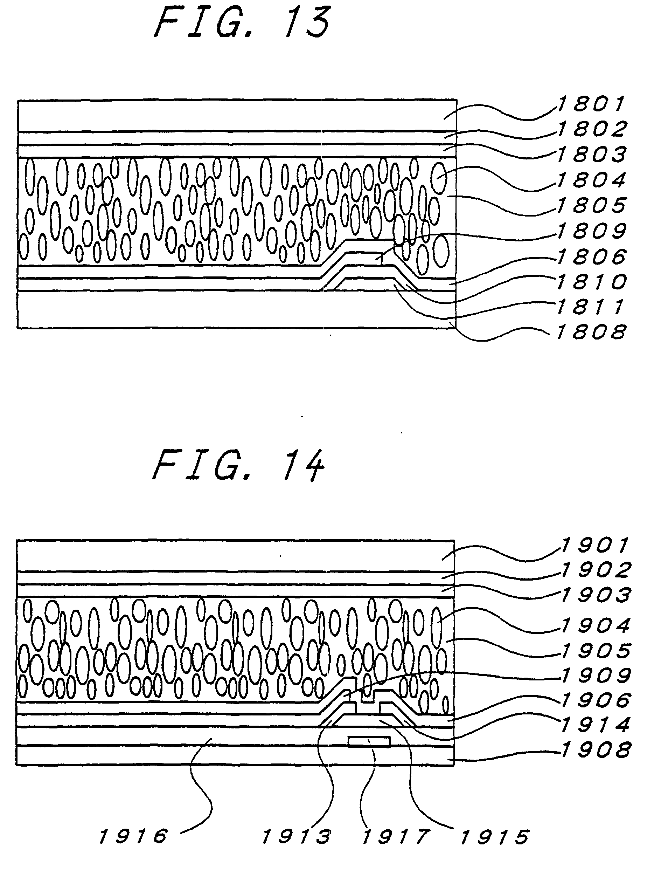

Fig. 13 illustrates a polymer dispersed liquid crystal display element according to the eleventh embodiment of the present invention. The display element of this embodiment employs an MIM element which is a two-terminal composite element.

A method of fabricating this display element will now be described. First, tantalum was vapor-deposited as an electrode 1811 on the surface of the substrate 1808, and the resultant surface was oxidized, forming an insulating layer 1810. Aluminum was vapor-deposited as a pixel electrode 1809 on the insulating layer 1810. Further, the substrate 1808 with an MIM element formed thereon and the substrate with an electrode 1802 formed thereon were soaked for 30 min in a 2% solution of LP-8T (trade name), produced by Shin-Etsu Silicon Co. Ltd., cleaned with water, and dried at 130°C, yielding alignment films 1803 and 1806. The alignment films 1803 and 1806 of the two substrates 1801 and 1808 were securely set face-to-face with a cell thickness of 10 µm.

A mixture of a paraphenyl methacrylate and a liquid crystal, acquired at a ratio of 1 to 10 at 100°C, was sealed into the gap. As the liquid crystal, RDN00775 (product number), produced by Rodic Inc., was used. The mixture of the paraphenyl methacrylate and the liquid crystal was then gradually cooled to be aligned, and was exposed to ultraviolet rays at a room temperature to harden the paraphenyl methacrylate, and cause phase Separation of the liquid crystal 1805 from the paraphenyl methacrylate 1804.

The thus fabricated polymer dispersed liquid crystal display element was almost transparent upon application of no voltage thereto, and had a reflectance of 50%.

When an AC electric field of 10 KHz and 7 V was applied between two electrodes, the difference between the refractive indices of the polymer 1104 and liquid crystal 1105 caused the light to scatter. The reflectance in the light scattering state was 5%. According to this embodiment, a sample with 400 scan lines and 640 Signal lines was prepared, and this sample could provide a uniform display over the whole screen. The formation of the reflection layer on one of the substrate can permit the use of an MIM element, making this invention applicable to a large-capacity display body.

Although the electrode 1809 serving as the reflection layer is provided on the substrate 1808 on which the MIM element is formed in this embodiment, the reflection layer may be deposited to overlap the electrode 1802 of the substrate 1801 facing the substrate 1808, or may be laminated thereon.

### (Twelfth Embodiment)

Fig. 14 illustrates a polymer dispersed liquid crystal display element according to the twelfth embodiment of the present invention. The display element of this embodiment employs a TFT element which is a three-terminal composite element.

A method of fabricating the display element will be described below. First, a gate electrode 1917 was formed on the surface of the substrate 1908, and a gate insulating layer 1916 was provided on the electrode 1917, and a semiconductor layer 1915, a drain electrode 1914, a source electrode 1913 and a pixel electrode 1909 also serving as a reflection layer were formed on the resultant structure. An alignment film 1906 was formed on the substrate 1908 on which the TFT element was formed as described. With regard to the other substrate 1901, an electrode 1902 was formed on that substrate, with an alignment film 1903 formed on the electrode 1902, and the resultant structure was subjected to an alignment process. Then, those two substrates 1901 and 1908 were combined to have the aligning directions nearly parallel to each other, and the periphery of the resultant structure was molded with the cell thickness fixed to 7 µm.

A mixture of a side-chain type polymer liquid crystal having a cyanobiphenol group and a nematic liquid crystal, made at 120°C was sealed into the gap. RDN00775 (product number), a product of Rodic Inc., was used as the liquid crystal. Subsequently, the mixture of the side-chain type polymer liquid crystal and the liquid crystal was gradually cooled, and they were aligned to cause phase separation of the liquid crystal from the polymer liquid crystal at 70°C.

The thus fabricated polymer dispersed liquid crystal display element was almost transparent upon application of no voltage thereto, and had a reflectance of 50%.

When an AC electric field of 10 KHz and 7 V was applied between two electrodes, the difference between the refractive indices of the polymer 1904 and liquid crystal 1905 caused light scattering. The reflectance in the light Scattering state was 5% According to this embodiment, a sample with 400 scan lines and 640 signal lines was prepared, and this sample could provide a uniform display over the whole screen. The formation of the reflection layer on one substrate can permit the use of a TFT element, making this invention applicable to a large-capacity display body.

Although the above embodiment has been explained as a polymer reflected type with reference to its application to an MIM element and TFT, the embodiment may obviously be applied to MIM and TFT elements as in a transmittive type as long as the drive voltage for the polymer dispersed liquid crystal display element can be reduced. Alternatively, if the voltage withstandability of the MIM and TFT elements is enhanced, this embodiment may directly be combined with the MIM and TFT elements in a transmittive mode.

While the eleventh to twelfth embodiments use two substrates, the liquid crystal polymer composite layer may be formed on one substrate. The cell thickness is not limited to the specified value, but may be determined according to the usage. The material for the alignment films is not limited to LT-8T (trade name), produced by Shin-Etsu Silicon Co., Ltd., but a variety of other materials, such as DMOAP and stearate, which can align a liquid crystal perpendicularly, may be used as well. It is still effective to conduct an alignment process on only one substrate. The liquid crystal may have a negative dielectric anisotropy. It is better that the liquid crystal has as large a birefringence factor Δn as possible. The optimum liquid crystal content in the display element is 50 to 97%. If the liquid crystal content is less than this amount, the display element will not respond to an electric field. If it is greater than the value, the proper contrast will not be acquired. If dichroic dye, such as S-3l4 (product number), produced by Mitsui Toatsu Chemicals, Inc., is mixed in the liquid crystal, scattering will occur on the color of the dye when an electric field is applied, and the display element will become transparent when the electric field is removed. It is desirable that the polymer has birefringence and its normal refractive index is equal to the normal refractive index of the liquid crystal.

The present invention is not limited to those embodiments, but may be applied to a Computer display, a light controlling element, a light valve, a light control mirror, etc.

### (Thirteenth Embodiment)

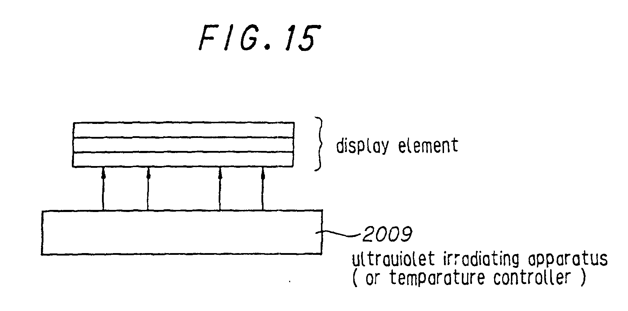

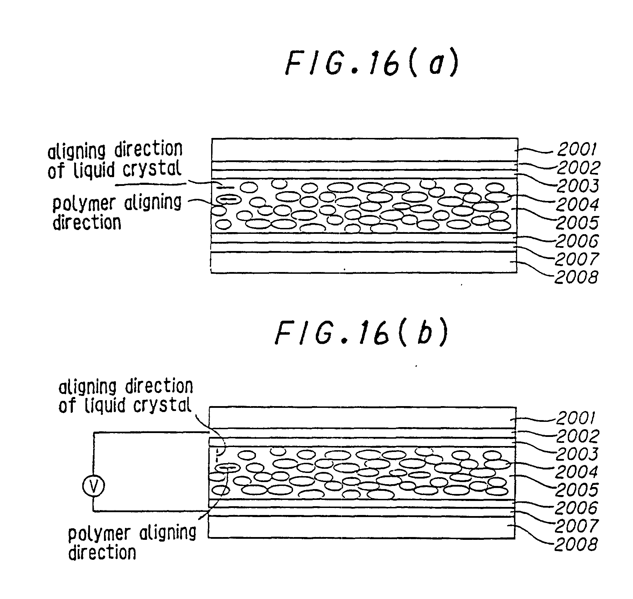

Fig. 16 illustrates a polymer dispersed liquid crystal element according to the thirteenth embodiment of the present invention. This embodiment employs a photopolymerizing precursor as polymer precursor. The conceptual diagram of an apparatus for fabricating it is illustrated in Fig. 15.

A method of fabricating the polymer dispersed liquid crystal display element will now be described.

First, electrodes 2002 and 2007 were formed on two substrates 2001 and 2008 by a vapor deposition method. A 2% solution of JIB (trade name), produced by Japan Synthetic Rubber Co., Ltd., as polyimide was spin-coated on the surfaces of the electrodes 2002 and 2007 at a rate of 2000 r.p.m., yielding alignment films 2003 and 2006. The substrates 2001 and 2008 with the respective alignment films 2003 and 2006 were annealed at 150°C. The surfaces of the alignment films 2003 and 2006 were rubbed in one direction with breached cotton cloth. The rubbing directions were determined in such a way that they would become nearly parallel to each other when combining the two substrates. The surfaces of alignment films 2003 and 2006 of the two substrates 2001 and 2008 were placed opposite to each other, while fixing the cell thickness to 10 µm. A mixture of paraphenyl methacrylate and a nematic liquid crystal, acquired at a ratio of 1 to 10 at 100°C, was sealed into the gap. As the nematic liquid crystal, LV-R2 (product number), a product of Rodic Inc., was used, while S-1011 (product number), produced by Merck Co., Ltd., was used as a chiral component. Then, the mixture of the paraphenyl methacrylate and the nematic liquid crystal was gradually cooled, and they were aligned. The resultant structure was then exposed to ultraviolet rays emanating from an ultraviolet irradiating device 2009 as shown in Fig. 15, at a room temperature. As a result, the paraphenyl methacrylate was hardened and the polymer 2004 had phase separation from the liquid crystal 2005.Ultraviolet rays were irradiated to the display element by the ultraviolet irradiating device 2009, using two 4-w ultraviolet fluorescent lamps (GL-4 bactericide lamps produced by NEC Corporation) as ultraviolet irradiation lamps, for 20 min at a distance of 1 cm from the lamps. The ultraviolet fluorescent lamps have a peak light intensity at 254 nm, and the dose of the irradiation is 5 mW/cm².Ultraviolet lamp T-4L is available, too. The peak wavelength is 365 nm. If the dose of the lamp irradiation is increased, the particle sizes of the polymer to be produced become smaller, failing to secure sufficient scattering intensity. Further, as the particle sizes of the polymer become smaller, the polymer particles would float in the liquid crystal and will not be fixed as contrary to the expectancy that they should be aligned to be securely polymerized. As the polymer particles float by an electric field, it is not possible to provide stable display. In this respect it is desirable that the dose of the irradiation of the ultraviolet irradiation lamps be equal to 50 mW/cm² or below, more preferably, to be 10 mW/cm² or below. In other words, it is better to conduct polymerization for a long period of time with weak light intensity. Other types of lamps than the photopolymer fluorescent lamps may also be used as long as the above conditions are satisfied. The wavelength of lamps 18 not so important. If the lamps are set at the both sides of the display element, we can fabricate the element more uniformly.

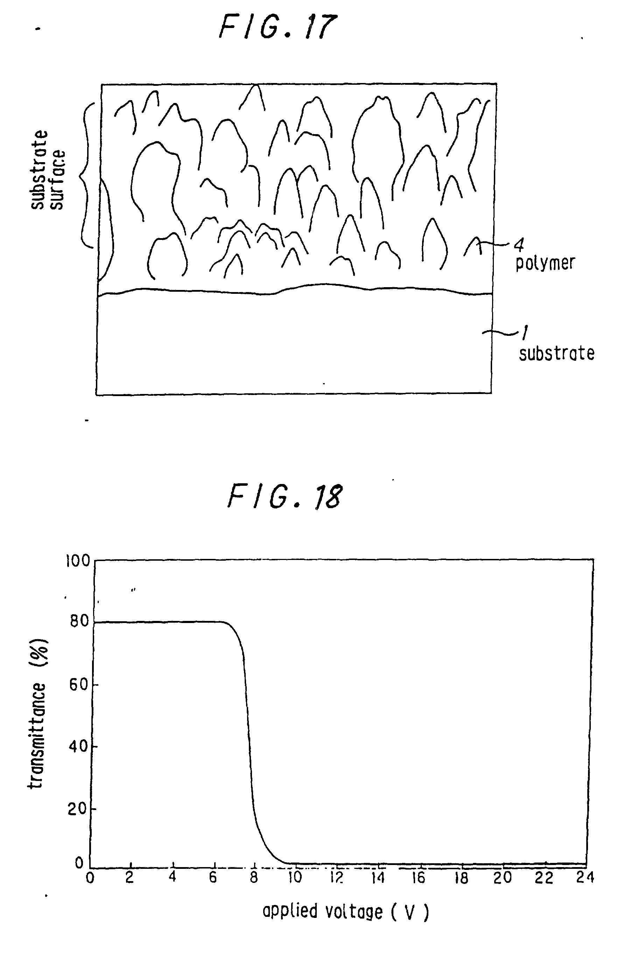

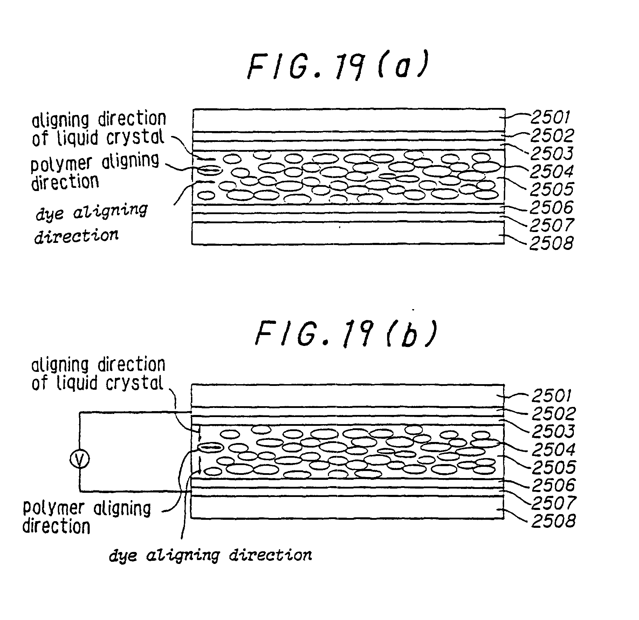

Fig. 17 shows an electron micrograph of the a cross section of the thus fabricated display element. It is understood from this diagram that the particles of the produced polymer are aligned along the aligning direction.

The polymer dispersed liquid crystal display element fabricated in the above manner was substantially transparent when applied with no voltage, and a transmittance of 80% was obtained.

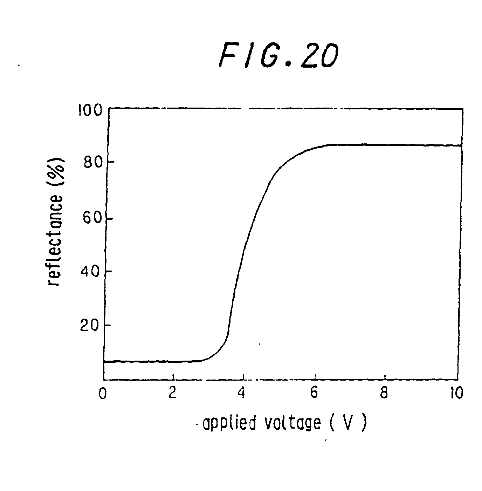

When an AC electric field of 10 KHz and 20 V was applied between two electrodes, the difference between the refractive indices of the polymer and liquid crystal caused light scattering. The transmittance at this time was 1%. As shown in Fig. 18, the threshold characteristic showing a change in transmittance in response to the applied voltage became precipitous, permitting the scanning with 16 scan lines in a time-shared driving mode.

A variety of polymers may be used for a precursor if they contain a skeleton similar to the skeleton of the liquid crystal, such as a biphenyl skeleton. The structure of the polymer active portion is not limited to an ethylene skeleton as long as it can have an ultraviolet polymerization. For instance, an epoxy polymer precursor can be used. This embodiment can also be applied to the case where a vertical alignment process is to be conducted on the substrates.

### (Fourteenth Embodiment)

This embodiment employs a thermal polymerizing precursor as a polymer precursor. This embodiment has the same basic structure as the thirteenth embodiment shown in Fig. 16.

A method of fabricating the polymer dispersed liquid crystal display element will now be described.

First, electrodes were formed on two substrates by a vapor deposition method. A 2% solution of SP-740 (trade name), produced by Toray Industries, Inc., as polyimide was spin-coated on the surfaces of the transparent electrodes at a rate of 2000 r.p.m., yielding alignment films. The substrates were annealed at 250°C. Then, the surfaces of the alignment films were rubbed in one direction with breached cotton cloth The rubbing directions were determined in such a way that they would become nearly parallel to each other when combining the two substrates. The surfaces of alignment films of the two substrates were placed opposite to each other, while fixing the cell thickness to 10 µm. An epoxy resin and a nematic liquid crystal were mixed at a ratio of 1 to 9 at 100°C and the resultant mixture was sealed into the gap. As the epoxy resin, YDF-170 (trade name)₁ a product of Toto Kasei Co.₁ Ltd., was used with addition of a curing agent 121 (trade name), produced by Shell Oil Co., Ltd. LV-R2 (product number), a product of Rodic Inc., was used as the nematic liquid crystal, and 1% of S-1011 (product number), produced by Merck Co.Ltd., was added. Then, the mixture of the epoxy resin and the nematic liquid crystal was gradually cooled, and they were aligned. The resultant structure was then left for two hours at 50°C using a temperature controller (see Fig. 15) to harden the epoxy resin and cause phase separation of the liquid crystal from the polymer. If the controllers are set at the both sides of the element, we can baricate the element more uniformly. The shapes of the particles of the polymer produced in the above manner were similar to the one shown in Fig. 17. As the thermosetting conditions differ from one a polymer precursor to another, it is desirable to control the temperature and the hardening time each time. That is, the hardening temperature should be determined so as to provide the structure shown in Fig. 17.

A variety of polymers may be used for a precursor if they contain a skeleton similar to the skeleton of the liquid crystal, such as a biphenyl skeleton. The structure of the polymer active portion is not limited to an ethylene skeleton as long as it can have an ultraviolet polymerization.

### (Fifteenth Embodiment)

This embodiment employs a thermosetting polymer as a polymer. This embodiment has the same basic structure as the thirteenth embodiment shown in Fig. 16.

A method of fabricating the polymer dispersed liquid crystal display element will now be described.

First, electrodes were formed on two substrates by a vapor deposition method. A 2% solution of SP-740 (trade name), produced by Toray Industries, Inc., as polyimide was spin-coated on the surfaces of the transparent electrodes at a rate of 2000 r.p.m., yielding alignment films. The substrates were annealed at 250°C. Then, the surfaces of the alignment films were rubbed in one direction with breached cotton cloth The rubbing directions were determined in such a way that they would become nearly parallel to each other when combining the two substrates. The surfaces of alignment films of the two substrates were placed opposite to each other, while fixing the cell thickness to 10 µm. A mixture of poly a methylstyrene and a nematic liquid crystal, acquired at a ratio of 15 to 85 at 120°C was sealed into the gap. LV-R2 (product number), a product of Rodic Inc., was used as the nematic liquid crystal, and 1% of S-1011 (product number), produced by Merck Co., Ltd., was added. Then, the mixture of the liquid crystal and the polymer were aligned in a liquid crystal phase, and gradually cooled at the cooling rate of 50°C/mn at a room temperature by the temperature controller (see Fig. 15), thereby causing phase separation of the liquid crystal from the polymer. If the temperature controllers are set at the both sides of the element, we can baricate the element more uniformly. The shapes of the particles of the polymer produced in the above manner were similar to the one shown in Fig. 17.

The thus fabricated polymer dispersed liquid crystal display element was almost transparent, and had a transmittance of 20%.

When an AC electric field of 10 KHz and 10 V was applied between two electrodes, the difference between the refractive indices of the polymer and liquid crystal caused light scattering. The transmittance at this time was 1%.

The thermosetting polymer is not limited to the above type, but any type which can be dissolved into the liquid crystal, has a liquid crystal phase when dissolved into the liquid crystal, and has phase separation from the liquid crystal at an operational temperature, may be used as well. Further, a polymer liquid crystal which satisfies this condition can also be used.

The cooling speed for causing phase separation of the polymer in an aligned state and set the particle sizes of the phase-separated polymer to the best one to cause light scattering differs depending on the types of polymers in use. It is therefore desirable to optimize the speed each time so as to provide the shape shown in Fig. 17 or the one similar thereto.

The material for the alignment films 15 not limited to the shown type, but a variety of other materials which can align a liquid crystal in a physical sense, may also be used. It is still effective to conduct an alignment process on only one of the substrates. When the surfaces of two substrates are to be subjected to an alignment process, the aligning directions should be optimized according to the usage.

The liquid crystal having as great a refractive index anisotropy Δn as possible is preferable to increase the contrast. Further, the liquid crystal may be of a type having a positive dielectric anisotropy. The optimum liquid crystal content in the display element is 50 to 97%. If the liquid crystal content is less than this amount, the display element will not respond to an electric field. With a greater liquid crystal content, the proper contrast will not be yielded. The chiral component to be mixed into the liquid crystal is not restrictive to the specified one, but other types may be used. It is desirable that the mixing ratio of the chiral component to the liquid crystal is between 0.1% and 5%.

While this embodiment uses two substrates, the liquid crystal polymer composite layer may be formed on one substrate. It is unnecessary to form alignment films on both substrates; an alignment process only on one of the substrate is also effective. The cell thickness is not limited to the specified value, but may be determined according to the usage.

Although the ultraviolet irradiating device and the temperature controller are disposed on one side of the display element, they may be arranged on both sides.

The present invention is not limited to the above embodiment, but may be applicable to a computer display, a light controlling element, a light valve, a light control mirror, etc. Of course it is easy to combine this display element with a two-terminal element and a three-terminal element to provide a large capacity display body.

### (Sixteenth Embodiment)

Fig. 19 shows a polymer dispersed liquid crystal display element according to the sixteenth embodiment of the present invention. This embodiment has dichroic dye added to a liquid crystal and permits one electrode to serve as a reflection layer.

A method of fabricating the polymer dispersed liquid crystal display element will now be described. First, electrodes 2502 and 2507 were formed on two substrates 2501 and 2508 by a vapor deposition method. As the electrode 2507 serves as a reflection layer, it was made of aluminum. The electrode 2502 was a transparent electrode (ITO: indium-tin-oxide). A 2% solution of JIB (trade name), produced by Japan Synthetic Rubber Co., Ltd., as polyimide was spin-coated on the surfaces of the electrodes 2502 and 2507 (with dimethyl acetoamide as a solvent) at a rate of 2000 r.p.m., yielding alignment films 2503 and 2506. The alignment films 2503 and 2506 was annealed at 150°C. Then, the surfaces of the alignment films 2305 and 2306 was rubbed in one direction with breached cotton cloth. The horizontal alignment process is not restrictive to the mentioned type, but may employ a polymer alignment film, as well as other methods, such as an oblique evaporation method and LB film method, which can align the liquid crystal, may be widely used. Rubbing the substrates without providing the alignment films is also effective. The alignment films 2503 and 2506 of the two substrates 2501 and 2508 were securely set face-to-face with a cell thickness of 5 µm. A mixture of an ultraviolet-hardened polymer precursor and a liquid crystal, acquired at a ratio of 15:85 at 100°C, was sealed into the gap. As the ultraviolet-hardened polymer precursor, biphenol methacrylate was used. As the liquid crystal, LV-R2 (product number) having a positive dielectric anisotropy, produced by Rodic Inc., was used and S-1011 (product number), produced by Merck Co., Ltd., as a chiral component, and S-344 as dichroic dye were added to the liquid crystal at the ratio of 97:1:2. The mixture of the ultraviolet-hardened polymer precursor and the liquid crystal was then gradually cooled, and exposed to ultraviolet rays to polymerize the polymer precursor, and cause phase separation of the liquid crystal 2505 from the polymer 2504.

The operational principle of the display element fabricated in this manner will now be explained. The polymer 2504 and the liquid crystal 2505 shown in Fig. 19 show similar refractive index anisotropies. The refractive index is approximately 1.5 in a direction parallel to the aligning direction, and about 1.7 in a direction perpendicular to the aligning direction.

The liquid crystal 2505 is aligned with the polymer 2504 in the same direction when an electric field is not applied, as shown in Fig. 19A. The refractive indices of the liquid crystal 2505 and the polymer 2504 therefore match each other in a direction perpendicular to the substrates 2501 and 2508. Two-color dye was then added to the liquid crystal 2505 to be aligned in the same direction as the liquid crystal 2505, s6 that incident light from direction perpendicular to the aligning direction of the liquid crystal 2505 or perpendicular to the substrates 2501 and 2508, can be absorbed most effectively. At this time, the display element display black as the color of the dichroic dye.

When the power supply is connected between the electrodes 2502 and 2507 to apply an electric field to the liquid crystal polymer composite layer, as shown in Fig 19B, only the liquid crystal 2505 is aligned in the field direction, i.e., in a direction perpendicular to the substrates 2501 and2508,while the polymer 2504 remains in the previous aligning direction. In the field direction perpendicular to the substrates 2501 and 2508, therefore, the refractive index of the liquid crystal is changed to about 1.5, while that of the polymer 2504 remains unchanged to be approximately 1.7.The difference between the refractive indices of the polymer 2504 and the liquid crystal 2505 in the field direction is therefore about 0.2.This difference causes incident light from the direction perpendicular to the substrates 2501 and 2508 to scatter. As the dichroic dye is also aligned in the same direction of the liquid crystal 2505 or the field direction, so that the absorption of the dye in the field direction will not occur, making the display element translucent.

If no chiral component is mixed in the nematic liquid crystal 2505, of the light incident perpendicular to the substrates 2501 and 2508, only the polarized light having its vibrating direction parallel to the plane where the liquid crystal 2505 can move, or a plane parallel to the surface of the sheet of Fig. 19, is modulated. This permits the contrast from being sufficient improved. When the chiral component is mixed into the nematic liquid crystal 2505 as in this embodiment, of the incident light perpendicular to the substrates 2501 and 2508, polarized light whose vibrating direction is not parallel to the plane where the liquid crystal can move, can also be modulated efficiently, thus providing sufficiently improved contrast.

Then, the electrooptic characteristic of the display element was measured. With an AC electric field of 1 KHz applied between two electrodes, the relation between the voltage value and the reflectance as the voltage value is changed was measured. The results are given in Fig. 20. As compared with the electrooptic characteristic of the conventional reflected polymer dispersed liquid crystal display element, the drive voltage is reduced to about 1/10, and the visibility has also been improved. If the electrodes 2502 and 2507 are shaped into a character, the display element can provide a display to cause a white character to stand upward as in a black mirror. Further, the precipitousness is excellent and the time-shared driving was possible at a duty ratio of 1/4.

The liquid crystal is not restrictive to the one specified in this embodiment. The best liquid crystal content is 50 to 97% in the entire display element. If the liquid crystal content is less than this value, the display element will not respond to an electric field. If the liquid crystal content is greater than the value, the proper contrast cannot be accomplished. The dichroic dye content in the liquid crystal is 1 to 10%, preferably between 2% and 5%. The content has only to be optimized according to the types and usages of the dye. It is preferable that the content of the chiral component in the liquid crystal is 0.1 to 5%. This value of course varies depending on the chiral component in use, and satisfactory results can be obtained with a cholesteric pitch of 0.3 to 0.006 µm. There is no problem if the chiral component consists of multiple components.

As the polymer precursor, ester biphenol or other type which is easily mixed with the liquid crystal, has a liquid crystal phase in the mixed state, and can be photopolymerized, may be used as well. The polymer precursor having a skeleton similar to the liquid crystal molecules can provide a display element with excellent contrast and transmittance. Aluminum as well as other materials which reflect light can be used for the electrode serving as a reflection layer.

### (Seventeenth Embodiment)

This embodiment has the same fundamental structure as the sixteenth embodiment shown in Fig. 19, and uses a transparent electrode as an electrode 2507, and has a reflection layer provided at the back of the substrate 2508.

According to this embodiment, when the display is viewed from the front, the same display as presented by the sixteenth embodiment can be observed. When the display is viewed obliquely, there occurs parallax by the thickness of the substrate 2508, causing an image to be viewed doubled.

The present invention, when combined with active elements such as an MIM element or TFT element, can be applied to a large capacity computer display, light controlling element, light valve, light control mirror, and the like.

### (Eighteenth Embodiment)

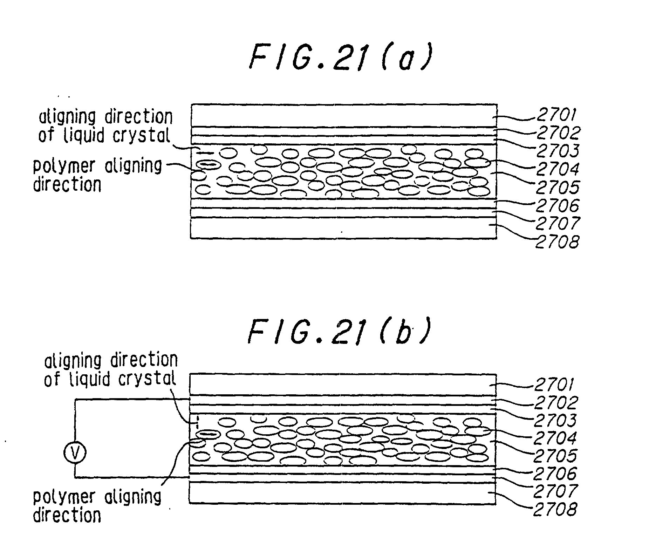

Fig. 21 shows a polymer dispersed liquid crystal display element according to the eighteenth embodiment of the present invention. This embodiment employs biphenyl methanol methacrylate and biphenol methacrylate as polymers.

A method of fabricating the polymer dispersed liquid crystal display element will now be described. First, electrodes 2702 and 2707 were formed on two substrates 2701 and 2708 by a vapor deposition method. A 2% solution of JIB (trade name), produced by Japan Synthetic Rubber Co., Ltd., as polyimide was spin-coated on the surfaces of the electrodes 2702 and 2707 (with dimethyl acetoamide as a solvent) at a rate of 2000 r.p.m., yielding alignment films 2703 and 2706. The alignment films 2703 and 2706 was annealed at 150°C. Then, the surfaces of the alignment films 2705 and 2706 was rubbed in one direction with breached cotton cloth. The horizontal alignment process is not restrictive to the mentioned type, but may employ a polymer alignment film, as well as other methods, such as an oblique evaporation method and LB film method, which can align the liquid crystal, may be widely used. The alignment films 2703 and 2706 of the two substrates 2701 and 2708 were securely set face-to-face with a cell thickness of 10 µm. A mixture of biphenyl methanol methacrylate and biphenol methacrylate as an ultraviolet-hardened polymer precursor at a ratio of 1:1 and a liquid crystal were mixed at a ratio of 1:9, and the resultant mixture was sealed in the gap. As the liquid crystal, LV-R2 (product number), produced by Rodic Inc., and 1% of S-1011 (product number), produced by Merck Co., Ltd., as a chiral component, were mixed together. The mixture of the polymer precursor and the liquid crystal was then gradually cooled, and exposed to ultraviolet rays to polymerize the polymer precursor, and cause phase separation of the liquid crystal 2705 from the polymer 2704.

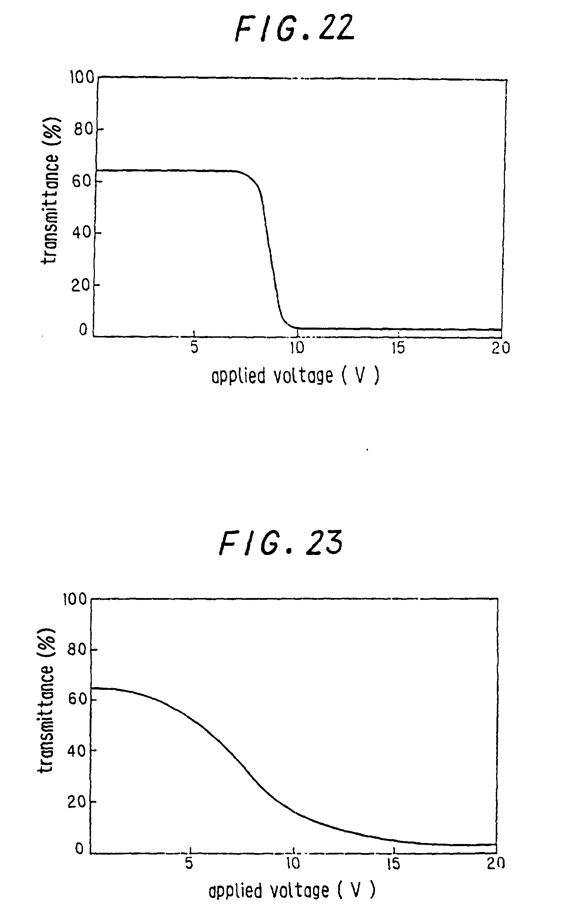

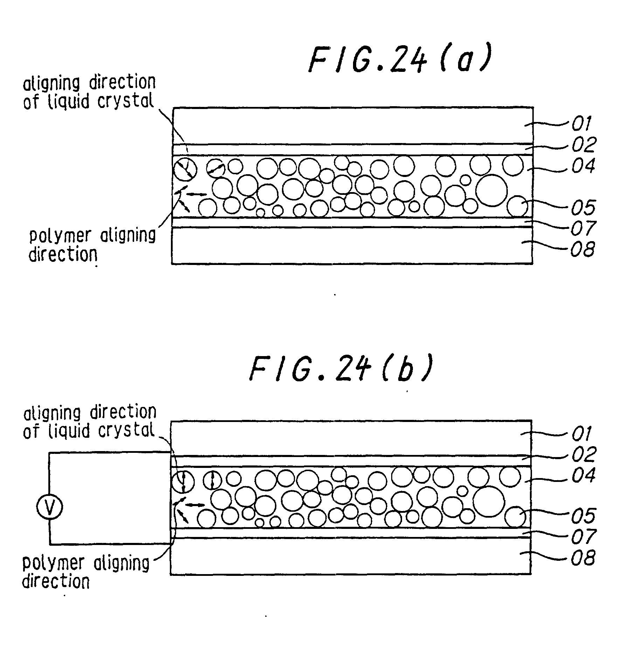

The electrooptic characteristic of the thus fabricated display element was measured. Fig. 22 shows the results of measuring the relationship between the voltage value and the transmittance when an AC electric field of 10 KHz was applied between two electrodes and the voltage value is changed. Fig. 23 shows the electrooptic characteristic of the conventional polymer dispersed liquid crystal display element. As illustrated in both diagrams, this embodiment has improved the precipitousness considerably as compared with the previously-described embodiments. Then the contrast at the time a time-shared drive waveform is applied to the display element of this embodiment was measured. The contrast at this time was 33:1 for a duty ratio of 1/4, 27:1 for a duty ratio of 1/8, and 4:1 for a duty ratio of 1/16. As the prior art has a limited duty ratio of 1/3 in a time-shared driving mode, the contrast has been improved significantly according to this embodiment.

The optimum liquid crystal content in the display element is 50 to 97%. If the liquid crystal content is less than this amount, the display element will not respond to an electric field. With a greater liquid crystal content, the proper contrast will not be yielded. As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of µm and C is the concentration expressed by %. The concentration is about 0.1% to 5%, which is 0.25 to 0.0059 µm in terms of pitch. Even when other chiral components are to be used, it is desirable that the pitch of the liquid crystal fall within this range. There will not be any problem if another type of chiral component is used.

The greater the amount of ester biphenyl methanol, the better the precipitousness of the threshold characteristic becomes. If the precipitousness is too high, however, the display element will not have optical response to an electric field. In this respect the allowable amount of the ester biphenyl methanol contained greatly varies depending on the type of the liquid crystal in use. When LV-R2 (product number), Rodic Inc., or RDP80616 is used as a liquid crystal, its content in the polymer should be 80% or less.

As the polymer, a polymer precursor which can be aligned in a state where it is mixed with a liquid crystal and can be photopolymerized, may be used. To acquire the effect of this embodiment, one polymer precursor at the mixing time should be a ester vinyl dielectric of vinyl ester biphenol. The polymer precursor having a skeleton similar to the liquid crystal molecules can provide a display element with excellent threshold characteristic as well as excellent contrast and transmittance, as presented above.

### (Nineteenth Embodiment)

This embodiment uses methacrylate of naphtol as a polymer, and its basic structure is the same as that of the eighteenth embodiment in Fig. 21.

A method of fabricating the liquid crystal display element will now be described. The assembly up to the alignment process of the substrates is the same as that of the eighteenth embodiment. A mixture of biphenyl acrylate and naphtol biphenol methacrylate as an ultraviolet-hardened polymer precursor at a ratio of 1:1 and a liquid crystal were mixed at a ratio of 1:9 at 100°C, and the resultant mixture was sealed in the gap. As the liquid crystal, LV-R2 (product number), produced by Rodic Inc., and 1% of S-1011 (product number), produced by Merck Co., Ltd., as a chiral component, were mixed together. The mixture of the polymer precursor and the liquid crystal was then gradually cooled, and exposed to ultraviolet rays to polymerize the polymer precursor, and cause phase separation of the liquid crystal from the polymer.

The electrooptic characteristic of the thus fabricated display element was measured, and the results are almost the same as those of the eighteenth embodiment. With regard to the time-shared driving characteristic, the contrast was 20:1 for a duty ratio of 1/4, 15:1 for a duty ratio of 1/8, and 4:1 for a duty ratio of 1/16.

The optimum liquid crystal content in the display element is 50 to 95%. If the liquid crystal content is less than this amount, the display element will not respond to an electric field. With a greater liquid crystal content, the proper contrast will not be yielded. As the chiral component to be mixed into the liquid crystal, other type than the one specified in this example may also be used. The rotary property which determines the pitch of the liquid crystal is important. The pitch of the liquid crystal when the chiral component is mixed therein can be expressed as P = 1/34C where P is the pitch given in the units of *µ*m and C is the concentration expressed by %. The concentration is about 0.1% to 5%, which is 0.25 to 0.0059 *µ*m in terms of pitch. Even when other chiral components are to be used, it is desirable that the pitch of the liquid crystal fall within this range. There will not be any problem if another type of chiral component is used. The greater the amount of ester naphtol, the better the precipitousness of the threshold characteristic becomes. If the precipitousness is too high, however, the display element will not have optical response to an electric field. In this respect the allowable amount of the ester naphtol contained greatly varies depending on the type of the liquid crystal in use. When LV-R2 (product number), Rodic Inc., or RDP80616 is used as a liquid crystal, its content in the polymer should be 80% or less. As the polymer, a polymer precursor which can be aligned in a state where it is mixed with a liquid crystal and can be photopolymerized, may be used. To acquire the effect of this embodiment, one polymer precursor at the mixing time should be a ester vinyl dielectric of naphtol. The polymer precursor having a skeleton similar to the liquid crystal molecules can provide a display element with excellent threshold characteristic as well as excellent contrast and transmittance, as presented above.

The present invention not limited to the above embodiments, but may be further improved to be applicable to a large capacity computer display, light controlling element, light valve, light control mirror, and the like, as defined in the claims.

## Claims

1. A liquid crystal device having
first and second electrode means (302, 307),
a liquid crystal composite layer sandwiched between said first and second electrode means, said composite layer comprising a liquid crystal (305) and a polymer (304) in a phase separated state with the polymer being dispersed in the liquid crystal, and
means for applying a voltage between said first and second electrode means,
**characterized in that,**
a respective alignment film (303, 306) is provided on each of said electrode means (302, 307) the alignment films causing said liquid crystal (305) and said polymer (304), when no voltage is applied to said electrode means (302, 307), to be aligned in parallel to each other in a twist structure so as to cause a transparent state of said composite layer, while said composite layer assumes a light scattering state when a voltage is applied.

2. The device according to claim 1, **characterized in that** said composite layer is sandwiched between two substrates (301, 308) each having a transparent electrode (302, 307) provided on an inner surface thereof.

3. The device according to claim 1, **characterized in that** said composite layer is formed on a single substrate having a first electrode formed on a surface thereof, and has a top surface on which a second electrode is formed, at least one of the electrodes being transparent.

4. The device according to claim 1 or 3, **characterized in that** one of said electrodes (307, 2507) is reflective.

5. The device according to claim 2, 3 or 4, **characterized in that** said liquid crystal has a positive dielectric anisotropy, and said liquid crystal and said polymer are aligned in parallel to said substrates (301, 308) or said substrate, respectively, when no electric field is applied.

6. The device according to claim 2 or claims 2 and 4, **characterized in that** a reflective layer is formed on the inner face of one of said substrates (301, 308).

7. The device according to any one of claims 1 to 6, **characterized in that** said liquid crystal (305) is a nematic liquid crystal containing a chiral component.

8. The device according to any one of claims 1 to 7, **characterized in that** said liquid crystal (305) contains dichroic dye.

9. The device according to any one of claims 1 to 8, **characterized in that** said polymer (304) consists of a polymer containing a biphenyl group.

10. The device according to any one of claims 1 to 9, **characterized in that** said polymer (304) is of an ultraviolet-hardened type, of a heat-hardened type, or of a thermoplastic type.

11. The device according to any one of claims 1 to 17, **characterized in that** said polymer (304) is a polymer liquid crystal.

12. The device according to any one of claims 1 to 11, **characterized in that** said polymer has a cosolvent, and has a liquid crystal phase in a solution phase state.

13. The device according to any one of claims 1 to 8, **characterized in that** said polymer has been formed by polymerization of at least two types of polymer precursors having a polymer portion and an aromatic ring.

14. The device according to claim 13, **characterized in that** at least one of said polymer precursors contains a mesogen portion or fluorine atoms on a side chain accompanying a mesogen portion.

15. The device according to claim 13, **characterized in that** at least one of said polymer precursors has a mesogen portion containing naphthalene, phenyl or biphenyl and a derivative thereof.

16. The device according to claim 13, **characterized in that** said polymer precursors have been polymerized to be hardened by ultraviolet rays.

## Patentansprüche

1. Flüssigkristallvorrichtung mit
ersten und zweiten Elektrodenanordnungen (302, 307),
einer sandwichartig zwischen der ersten und zweiten Elektrodenanordnung angeordneten Flüssigkristall-Verbundschicht, wobei die Verbundschicht einen Flüssigkristall (305) und ein Polymeres (304) in einem phasengetrennten Zustand umfasst, wobei das Polymere im Flüssigkristall dispergiert ist, und
eine Einrichtung zum Anlegen einer Spannung an die erste und zweite Elektrodenanordnung,
**dadurch gekennzeichnet,**
dass ein jeweiliger Ausrichtungsfilm (303, 306) an jeder der Elektrodenanordnungen (302, 307) vorgesehen ist, wobei die Ausrichtungsfilme bewirken, dass sich der Flüssigkristall (305) und das Polymere (304) ohne Anlegen einer Spannung an die Elektrodenanordnungen (302, 307) parallel zueinander in einer verdrillten Struktur ausrichten, so dass ein durchsichtiger Zustand der Verbundschicht hervorgerufen wird, während die Verbundschicht beim Anlegen einer Spannung einen Lichtstreuungszustand annimmt.

2. Vorrichtung nach Anspruch 1, **dadurch gekennzeichnet,** dass die Verbundschicht sandwichartig zwischen zwei Substraten (301, 308) angeordnet ist, die jeweils an ihrer inneren Oberfläche eine durchsichtige Elektrode (302, 307) aufweisen.

3. Vorrichtung nach Anspruch 1, **dadurch gekennzeichnet,** dass die Verbundschicht auf einem einzigen Substrat, das auf einer Oberfläche eine darauf ausgebildete erste Elektrode aufweist, ausgebildet ist und eine obere Oberfläche aufweist, auf der eine zweite Elektrode ausgebildet ist, wobei mindestens eine der Elektroden durchsichtig ist.

4. Vorrichtung nach Anspruch 1 oder 3, **dadurch gekennzeichnet,** dass eine der Elektroden (307, 2507) reflektierend ist.

5. Vorrichtung nach Anspruch 2, 3 oder 4, **dadurch gekennzeichnet,** dass der Flüssigkristall eine positive dielektrische Anisotropie aufweist und der Flüssigkristall und das Polymere parallel zu den Substraten (301, 308) bzw. zu dem Substrat ausgerichtet sind, wenn kein elektrisches Feld angelegt ist.

6. Vorrichtung nach Anspruch 2 oder nach den Ansprüchen 2 und 4, **dadurch gekennzeichnet,** dass eine reflektierende Schicht auf der Innenseite von einem der Substrate (301, 308) ausgebildet ist.

7. Vorrichtung nach einem der Ansprüche 1 bis 6, **dadurch gekennzeichnet,** dass es sich beim Flüssigkristall (305) um einen nematischen Flüssigkristall, der eine chirale Komponente enthält, handelt.

8. Vorrichtung nach einem der Ansprüche 1 bis 7, **dadurch gekennzeichnet,** dass der Flüssigkristall (305) einen dichroitischen Farbstoff enthält.

9. Vorrichtung nach einem der Ansprüche 1 bis 8, **dadurch gekennzeichnet,** dass das Polymere (304) aus einem Polymeren mit einem Gehalt an einer Biphenylgruppe besteht.

10. Vorrichtung nach einem der Ansprüche 1 bis 9, **dadurch gekennzeichnet,** dass es sich beim Polymeren (304) um einen UV-gehärteten Typ, einen wärmegehärteten Typ oder einen thermoplastischen Typ handelt.

11. Vorrichtung nach einem der Ansprüche 1 bis 17, **dadurch gekennzeichnet,** dass es sich beim Polymeren (304) um einen Polymer-Flüssigkristall handelt.

12. Vorrichtung nach einem der Ansprüche 1 bis 11, **dadurch gekennzeichnet,** dass das Polymere ein Colösungsmittel aufweist und im Lösungszustand eine Flüssigkristallphase aufweist.

13. Vorrichtung nach einem der Ansprüche 1 bis 8, **dadurch gekennzeichnet,** dass das Polymere durch Polymerisation von mindestens zwei Typen von Polymervorläufern mit einem Polymerteil und einem aromatischen Ring gebildet worden ist.

14. Vorrichtung nach Anspruch 13, **dadurch gekennzeichnet,** dass mindestens einer der Polymervorläufer einen mesogenen Teil oder Fluoratome an einer einen mesogenen Teil begleitenden Seitenkette enthält.

15. Vorrichtung nach Anspruch 13, **dadurch gekennzeichnet,** dass mindestens einer der Polymervorläufer einen mesogenen Teil mit einem Gehalt an Naphthalin, Phenyl oder Biphenyl oder ein Derivat davon aufweist.

16. Vorrichtung nach Anspruch 13, **dadurch gekennzeichnet,** dass die Polymervorläufer unter Härtung mit UV-Strahlen polymerisiert worden sind.

## Revendications

1. Dispositif à cristaux liquides possédant
des premier et deuxième moyens d'électrode (302, 307),
une couche composite de cristaux liquides prise en sandwich entre lesdits premier et deuxième moyens d'électrode, ladite couche composite comprenant des cristaux liquides (305) et un polymère (304) dans un état de phase séparée, le polymère étant dispersé dans les cristaux liquides, et
un moyen pour appliquer une tension entre lesdits premier et deuxième moyens d'électrode,
caractérisé en ce que
il y a un film d'alignement respectif (303, 306) sur chacun desdits moyens d'électrode (302, 307), les films d'alignement provoquant l'alignement parallèlement l'un à l'autre desdits cristaux liquides (305) et dudit polymère (304) dans une structure en hélice, lorsqu'aucune tension n'est appliquée auxdits moyens d'électrode (302, 307), de façon à provoquer un état transparent de ladite couche composite tandis que ladite couche composite prend un état diffusant la lumière lorsqu'une tension est appliquée.

2. Dispositif selon la revendication 1, caractérisé en ce que ladite couche composite est prise en sandwich entre deux substrats (301, 308) possédant chacun une électrode transparente (302, 307) disposée sur une surface intérieure.

3. Dispositif selon la revendication 1, caractérisé en ce que ladite couche composite est formée sur un substrat unique possédant une première électrode formée sur une surface et possède une surface supérieure sur laquelle est formée une deuxième électrode, au moins une des électrodes étant transparente.

4. Dispositif selon la revendication 1 ou 3, caractérisé en ce qu'une desdites électrodes (307, 2507) est réfléchissante.

5. Dispositif selon la revendication 2, 3 ou 4, caractérisé en ce que lesdits cristaux liquides ont une anisotropie diélectrique positive et lesdits cristaux liquides et ledit polymère sont alignés parallèlement auxdits substrats (301, 308) ou audit substrat, respectivement, lorsqu'aucun champ électrique n'est appliqué.

6. Dispositif selon la revendication 2 ou les revendications 2 et 4, caractérisé en ce qu'une couche réfléchissante est formée sur la face intérieure de l'un desdits substrats (301, 308).

7. Dispositif selon l'une quelconque des revendications 1 à 6, caractérisé en ce que lesdits cristaux liquides (305) sont des cristaux liquides nématiques contenant un composant chiral.

8. Dispositif selon l'une quelconque des revendications 1 à 7, caractérisé en ce que lesdits cristaux liquides (305) contiennent un colorant dichroïque.

9. Dispositif selon l'une quelconque des revendications 1 à 8, caractérisé en ce que ledit polymère (304) consiste en un polymère contenant un radical biphényle.

10. Dispositif selon l'une quelconque des revendications 1 à 9, caractérisé en ce que ledit polymère (304) est d'un type durci par exposition aux rayons ultraviolets.

11. Dispositif selon l'une quelconque des revendications 1 à 10, caractérisé en ce que ledit polymère (304) est un polymère de cristaux liquides.

12. Dispositif selon l'une quelconque des revendications 1 à 11, caractérisé en ce que ledit polymère a un co-solvant et a une phase de cristaux liquides dans un état de phase en solution.

13. Dispositif selon l'une quelconque des revendications 1 à 8, caractérisé en ce que ledit polymère a été formé par polymérisation d'au moins deux types de précurseurs de polymères ayant une partie de polymère et un cycle aromatique.

14. Dispositif selon la revendication 13, caractérisé en ce qu'au moins desdits précurseurs de polymères contient une partie mésogène ou des atomes de fluor sur une chaîne latérale accompagnant une partie mésogène.

15. Dispositif selon la revendication 13, caractérisé en ce qu'au moins un des précurseurs de polymères a une partie mésogène contenant du naphtalène, du phényle ou du biphényle et un dérivé de ceux-ci.

16. Dispositif selon la revendication 13, caractérisé en ce que lesdits précurseurs de polymères ont été polymérisés pour être durcis par exposition aux rayons ultraviolets.
